# EUROPÄISCHE PATENTSCHRIFT

(11) **EP 3 655 671 B1**
(45) Veröffentlichungstag und Bekanntmachung des Hinweises auf die Patenterteilung: **08.09.2021**
(21) Anmeldenummer: 17740762.4
(22) Anmeldetag: 19.07.2017
(51) Int. Cl.: F16C 17/04, F16C 33/10, F01D 25/16

(54) **HYDRODYNAMISCH WIRKENDES LAGER**
HYDRODYNAMIC BEARING
PALIER À ACTION HYDRODYNAMIQUE

(43) Veröffentlichungstag der Anmeldung: 27.05.2020
(73) Patentinhaber: Konzelmann GmbH, 74369 Löchgau (DE); Berger, Martin, 75038 Oberderdingen (DE)
(72) Erfinder: BERGER, Martin, 75083 Oberderdingen-Flehingen (DE); LAAGE, Andreas, 74321 Bietigheim-Bissingen (DE); KONZELMANN, Milko, 74321 Bietigheim-Bissingen (DE); BAHRET, Thomas, 74321 Bietigheim-Bissingen (DE)
(74) Vertreter: Herrmann, Jochen
(86) Internationale Anmeldenummer: PCT/EP2017/068276
(87) Internationale Veröffentlichungsnummer: WO 2019/015753

(56) Entgegenhaltungen:
- EP-A1- 0 038 602
- EP-A1- 2 042 753
- WO-A1-2009/107819
- DE-A1-102008 060 370
- DE-A1-102011 085 681
- JP-A- H 102 326
- JP-A- 2004 036 790
- JP-A- 2015 124 727
- JP-U- H0 294 917
- JP-U- H02 132 121
- US-A- 1 786 565

## Beschreibung

Die Erfindung betrifft ein hydrodynamisch wirkendes Lager mit den Merkmalen des unabhängigen Anspruchs 1.

Aus der Schrift DE 100 34 123 C2 ist eine Wellenlagerung mit einem Gleitlager, in dessen Lagerbohrung eine Welle mit Lagerspiel geführt ist, bekannt. An einer Stirnseite des Gleitlagers ist eine Anlaufscheibe angeordnet und drehfest auf der Welle befestigt. Die Anlaufscheibe ist in Umfangsrichtung wellig, d.h. mit abwechselnden Wellenbergen und Wellentälern, ausgeführt. Die Wellenberge gleiten auf der Stirnseite des Gleitlagers. Die Wellen sind derart ausgeführt, dass axiale Stöße gedämpft und dass zur Verringerung der Gleitreibung hydrodynamische Effekte genutzt werden. Dabei weist die Anlaufscheibe eine gleichmäßige Dicke auf, d.h. auf den gegenüberliegenden Seiten der Anlaufscheibe stehen sich immer ein Wellenberg und ein Wellental gegenüber. Die Wellenberge sind winkelsymmetrisch zu den Wellentälern angeordnet. Durch eine spezielle Oberflächenstruktur der Anlaufscheibe in den Wellentälern und -flanken werden auch die Wellenberge gezielt mit Schmierstoff versorgt.

Die DE 1 208 952 offenbart ein Axialgleitlager mit einem zwischen ebenen, gegeneinander belasteten Flächen eingelagerten, Schmiermittelkeile bildenden Ring. Der Ring ist als in Umfangsrichtung gleichmäßig gewellte, elastische Ringscheibe gleichbleibender Stärke ausgeführt, so dass sich jeweils ein Wellenberg und ein Wellental auf den gegenüberliegenden Seiten der Ringscheibe gegenüberstehen. Die Ringscheibe bildet eine schwimmende Lagerscheibe zwischen den beiden ebenen Druckflächen des Lagers. Das Lager gewährleistet in beide Umlaufrichtungen eine gleich gute Schmierung.

Die in den Schriften DE 100 34 123 C2 und DE 1 208 952 gezeigte Anlaufscheibe bzw. Ringscheibe wirken aufgrund der gewellt ausgeführten Oberflächen hydrodynamisch. Dadurch bildet sich im Bereich der zwischen den Wellentälern und Wellenbergen gebildeten Keilflächen im Betrieb ein erhöhter Schmiermitteldruck aus. Dieser kann so stark ansteigen, dass zwischen den Scheiben und den angrenzenden Bauteilen kein unmittelbarer Kontakt und damit eine reine, verlustarme Flüssigkeitsreibung vorliegen.

Die beschriebene Anlaufscheibe bzw. Ringscheibe verformt sich bei axialer Belastung, wodurch die Wellenberge aufeinander zu verstellt und damit die Keilwinkel der angrenzenden Keilflächen flacher werden. Dies führt zu einem veränderten, hydrodynamisch aufgebauten Druck des verwendeten Schmierstoffs. Wie stark sich die Keilwinkel verändern hängt von dem Druck sowie von den mechanischen Eigenschaften der jeweiligen Scheibe und dabei insbesondere von deren Material und Materialstärke sowie von dem gegenseitigen Abstand der Wellenberge in Umfangsrichtung ab. Die Anzahl der Wellen pro Scheibe bestimmt die Anzahl der hydrodynamischwirksamen Flächen und kann nicht beliebig geändert werden. Eine Anpassung der axialen Verformung der Scheibe in Abhängigkeit von der bei der jeweiligen Anwendung einwirkenden Druckbelastung kann demnach sinnvoll nur durch eine Änderung der Materialstärke der Scheibe durchgeführt werden, da eine Anpassung über die Materialeigenschaften in der Praxis sehr aufwändig ist und nur eine begrenzte Auswahl geeigneter Materialien mit zumeist ähnlichen Materialeigenschaften zur Auswahl steht. Mit einer solchen Anpassung können Scheiben für unterschiedliche erwartete Belastungen ausgelegt werden. Nachteilig führt dies bei hohen axialen Belastungen zu hohen Materialstärken und damit hohen im Betrieb zu bewegenden Massen der Scheiben. Weiterhin vergrößert sich die Gesamtdicke der Scheiben, so dass sie bei räumlich begrenzten Einbausituationen nicht mehr verwendet werden können.

Die Schrift DE 39 01 265 A1 zeigt ein hydrodynamisches Axialgleitlagersegment. Das Axialgleitlagersegment liegt durch Erhöhungen beabstandet an einer Gehäusewand an. Gegenüberliegend weist das Axialgleitlagersegment eine Gleitfläche auf, die einem Gleitpartner zugewandt ist. Im unbelasteten Zustand ist der Abstand zwischen der Gleitfläche und dem Gleitpartner bis auf ggf. in die Gleitfläche eingebrachte Schmiernuten überall gleich groß. Unter Belastung biegt sich das Axialgleitlagersegment zwischen den Erhöhungen in Richtung der Gehäusewand durch. Dies führt im Bereich der Erhöhungen zu Wölbungen auf der Seite der Gleitfläche. Es werden so entsprechend der Anzahl der Erhöhungen umlaufend keilförmige Spalte erzeugt, die eine hydrodynamische Schmierung ermöglichen. Bei einer Veränderung der Belastung des Gleitlagers verändern sich die Durchbiegung und damit die Schmierspaltgeometrie. Dadurch kann der Schmierspalt an die jeweilige Belastung angepasst werden. Nachteilig bildet sich die hydrodynamisch wirkende Gleitfläche nur ein eine Richtung aus, so dass das Axialgleitlagersegment nur in eine Richtung montiert werden kann.

Die Schrift WO 2009/107819 A1 zeigt ein hydrodynamisches Axialgleitlager nach dem Oberbegriff des Anspruchs 1.

Es ist Aufgabe der Erfindung, ein hydrodynamisches Lager (Axiallager oder Anlaufscheibe) zu schaffen, welches eine einfache Anpassung an die erwartete axiale Belastung des Lagers sowie eine möglichst verlust- und verschleißarme, axiale Abstützung ermöglicht.

Dabei unterscheiden sich im Sinne der vorliegenden Erfindung eine Anlaufscheibe von einem Axiallager dahingehend, dass bei einem Axiallager die Axialkräfte berechenbar und bekannt sind, da hier eine konstruktive, definierte Anlage gegeben ist. Im Falle einer Anlaufscheibe sind die auf die Anlaufscheibe axial wirkenden Kräfte nicht im Detail bekannt, da diese aus Verschiebungen angrenzender Bauteile resultieren. Solche Verschiebungen können sich zum Beispiel aufgrund von Verzahnungsfehlern oder elastischen Verformungen eines Antriebssystems ergeben.

Die Aufgabe der Erfindung wird durch ein hydrodynamisch wirkendes Lager nach Anspruch 1 gelöst. Es wird somit ein beidseitig hydrodynamisch wirkendes Lager geschaffen, welches auf jeder seiner Seiten gezielt an die dort zu erwartende Belastung sowie an die insgesamt auf das Lager einwirkende Belastung angepasst werden kann. Die Erhebungen einer Seite des hydrodynamischen Lagers sind nicht mehr gegenüberliegend zu den Senken der zweiten Seite angeordnet, wodurch sich eine Vielzahl von Gestaltungsmöglichkeiten für die hydrodynamisch wirksamen Strukturen ergibt. Dies ermöglicht eine große Anpassungsfähigkeit des hydrodynamisch wirkenden Lagers an die zu erwartenden, axialen Kräfte.

Eine gleichmäßig über den Umfang des hydrodynamisch wirkenden Lagers verteilte Tragfähigkeit des hydrodynamisch wirkenden Lagers kann dadurch erreicht werden, dass die hydrodynamischen Strukturen wenigstens einer Seite des Lagers periodisch wiederholend ausgebildet sind.

Eine einfache Geometrie des hydrodynamisch wirkenden Lagers kann dadurch erreicht werden, dass Erhebungen der Strukturen auf der ersten Seite des Lagers in Umfangsrichtung winkelversetzt zu Senken den Strukturen auf der gegenüberliegenden zweiten Seite angeordnet sind.

Entsprechend einer bevorzugten Ausgestaltungsvariante der Erfindung kann es vorgesehen sein, dass Erhebungen einer Seite des Lagers zumindest teilweise in Umfangsrichtung winkelversetzt zu den Erhebungen der gegenüberliegenden Seite des Lagers angeordnet sind. Zwischen benachbarten, gegenüberliegenden Erhebungen ist so in Umfangsrichtung ein Hebel ausgebildet. Bei einer während des Einsatzes axial auf das hydrodynamisch wirkende Lager einwirkenden Belastung wird dieses auf Grund der Hebelwirkung elastisch verformt. Dabei verringert sich der in Achsrichtung gemessene Abstand der auf den gegenüberliegenden Seiten des Lagers angeordneten Erhebungen sowie der Abstand zwischen den Erhebungen und den benachbarten Senken einer Seite des Lagers. Bei verringertem Abstand zwischen den Erhebungen und den Senken verringert sich auch der Neigungswinkel der dazwischen angeordneten Schrägen der hydrodynamisch wirkenden Strukturen. Damit steigt der Druck des Schmiermittels bzw. Öls, der sich an den Schrägen aufbaut, an. Durch diesen Druckanstieg steigt die Tragfähigkeit des hydrodynamisch wirkenden Lagers an. Die Tragfähigkeit des Lagers passt sich somit selbsttätig an die vorliegende axiale Belastung an. Wie stark sich das hydrodynamisch wirkende Lager bei Belastung verformt hängt von der Dicke und den mechanischen Eigenschaften des Materials des Lagers sowie von dem Abstand benachbarter Erhebungen in Umfangsrichtung und damit der ausgebildeten Hebellänge ab. Bei gegebenem Material und gegebener Materialstärke des hydrodynamisch wirkenden Lagers kann durch Veränderung des Abstands benachbarter Erhebungen in Umfangsrichtung die Verformung des Lagers in Abhängigkeit von einer erwarteten axialen Belastung vorgegeben werden. Damit kann auch die Veränderung der Tragfähigkeit des Lagers in Abhängigkeit von einer axialen Belastung konstruktiv vorgegeben werden. Dies ist insbesondere vorteilhaft, da in Abhängigkeit von der Umgebung, in welcher das hydrodynamisch wirkende Lager eingesetzt wird, und den erforderlichen Anlaufeigenschaften nur eine begrenzte Auswahl an geeigneten Materialien zur Verfügung steht, welche in ihren mechanischen Eigenschaften zumeist ähnlich sind.

Eine Anpassung der Tragfähigkeit des Lagers in Abhängigkeit von der axialen Belastung durch entsprechend verwendeten Materialien, aus denen das hydrodynamisch wirkende Lager gebildet ist, ist somit nur begrenzt möglich. Ebenfalls ist häufig eine entsprechende Anpassung durch Variation der Materialstärke aufgrund der räumlichen Gegebenheiten, unter welchen das Lager eingesetzt werden soll, nur begrenzt möglich.

Vorzugsweise kann es vorgesehen sein, dass die Materialstärke des Lagers in Umfangsrichtung und/oder in radialer Richtung variiert. Die hydrodynamisch wirkenden Strukturen können so frei auf jeder Seite des Lagers ausgebildet und die Erhebungen versetzt zueinander ausgebildet werden.

Eine besonders bevorzugte Erfindungsvariante ist dergestalt, dass im Bereich der Erhebungen Ruhekontaktflächen ausgebildet sind, die vorzugsweise in Umfangsrichtung verlaufen. Im Stillstand bzw. beim Anlaufend des Lagers liegen die angrenzenden Bauteile zunächst an den Ruhekontaktflächen an, bis sich ein ausreichend hoher, hydrodynamischer Druck aufgebaut hat, um von der anfänglichen Haftreibung über eine Mischreibung in die gewünschte Flüssigkeitsreibung überzugehen. Im dynamischen Betrieb baut sich entlang der Schrägen ein Druck auf, welcher im Bereich der Ruhekontaktflächen seinen höchsten Wert einnimmt. Durch die Ruhekontaktflächen wird demnach die axiale Belastbarkeit des hydrodynamisch wirkenden Lagers sowohl im statischen wie auch im dynamischen Betrieb erhöht. Die Ruhekontaktflächen einer jeweiligen Seite des hydrodynamisch wirkenden Lagers sind vorzugsweise in einer Ebene angeordnet. Vorteilhaft kann es dabei vorgesehen sein, dass die Ruhekontaktflächen planparallel zu einer Mittenebene des Lagers ausgerichtet sind.

Vorzugsweise bilden sich die Ruhekontaktflächen während des Betriebs des hydrodynamisch wirkenden Lagers aus. Während einer Einlaufphase des hydrodynamisch wirkenden Lagers werden dabei die Erhebungen so weit abgerieben, bis sich eine durchgängige Flüssigkeitsreibung ausbildet, welche einen weiteren Abrieb verhindert. Das hydrodynamisch wirkende Lager optimiert sich somit selbsttätig dahingehend, dass bei Stillstand oder während des Anlaufens des Lagers mit den Ruhekontaktflächen ausreichend große Anlageflächen zwischen dem Lager und den angrenzenden Bauteilen vorliegen, um ein leichtgängiges Anlaufen des Lagers zu ermöglichen. Das hydrodynamisch wirkende Lager optimiert sich weiterhin selbsttätig derart, dass sich bei Erreichen der Betriebsdrehzahl ein so hoher hydrostatischer Druck aufbaut, dass eine durchgängig Flüssigkeitsreibung vorliegt.

Um zu vermeiden, dass das Schmiermittel bei sich drehendem Lager aus dem Bereich der Schrägen herausfließt und dadurch zumindest kein ausreichender hydrostatischen Druck aufgebaut werden kann, um eine reine Flüssigkeitsreibung zu erhalten, kann es vorgesehen sein, dass die Senken und/oder die Schrägen radial außen und/oder innen durch Stauränder begrenzt sind.

Vorzugsweise kann es vorgesehen sein, dass die Erhebungen und/oder die Senken von einem inneren zu einem äußeren Bereich des Lagers geradlinig oder auf gekrümmten Bahnen verlaufen. Geradlinig verlaufende Erhebungen und/oder Senken ermöglichen eine einfache, zwischen den beiden Seiten des hydrodynamisch wirkenden Lagers winkelversetzte Wellenstruktur. Mittels gekrümmt verlaufender Erhebungen und/oder Senken kann die Schmierstoffzuführung verbessert werden.

Eine einfache Herstellung des hydrodynamisch wirkenden Lagers kann dadurch erreicht werden, dass in Umfangsrichtung der von einer Ruhekontaktfläche abgedeckte Streckenabschnitt für alle Radien des Lagers gleich bleibt oder dass die Ruhekontaktflächen für alle Radien des Lagers in Umfangsrichtung den gleichen Winkelbereich überdecken.

Eine Anpassung der Tragfähigkeit des hydrodynamisch wirkenden Lagers an die zu erwartete, insbesondere axiale Belastung kann daher dadurch erfolgen, dass sich der in Umfangsrichtung von einer Ruhekontaktfläche abgedeckte Streckenabschnitt und/oder der in Umfangsrichtung von einer Ruhekontaktfläche überdeckte Winkelbereich mit steigendem Abstand von der Mittelachse des Lagers vergrößert und/oder verkleinert.

Die Anpassung der Tragfähigkeit des hydrodynamisch wirkenden Lagers kann weiterhin dadurch beeinflusst und damit an die jeweiligen Anforderungen angepasst werden, dass der in Richtung der Flächennormalen einer Mittenebene des Lagers gemessene Abstand der Erhebungen gegenüber der Mittenebene für alle Radien gleich bleibt und dass sich der Abstand der Senken gegenüber der Mittenebene in Abhängigkeit vom Radius verändert, insbesondere dass sich bei steigendem Radius der in Richtung der Flächennormalen der Mittenebene des Lagers gemessene Abstand zwischen einer Senke und einer angrenzenden Erhebung verkleinert. Verringert sich mit steigendem Radius der in Richtung der Flächennormalen der Mittenebene gemessene Abstand zwischen einer Senke und der angrenzenden Erhebung und damit die Tiefe der Senke, so kann zum einen die Steigung der zwischen der Senke und der Erhebung angeordneten Schräge verringert werden. Dadurch steigen zu größeren Radien hin der aufgebaute hydrostatische Druck und damit die Tragfähigkeit des Lagers. Zum anderen kann bei gleicher Neigung der Schräge deren Länge verkürzt und dadurch der hydrodynamische Druck zu größeren Radien hin verringert werden. Durch die gezielte Veränderung der Tragfähigkeit des Lagers über dessen Radius kann beispielsweise eine gleichmäßige, vom Radius unabhängige Tragfähigkeit des hydrodynamisch wirkenden Lagers erreicht werden. Denkbar ist es, dass die hydrodynamischen Strukturen urformend oder über einen spanenden oder prägenden Bearbeitungsschritt in das Lager eingebracht ist. Dabei kann mittels Urformen das hydrodynamisch wirkende Lager besonders kostengünstig hergestellt werden, während mittels spanender oder prägender Nachbearbeitungsschritte eine sehr genaue und reproduzierbar herstellbare Kontur der hydrodynamisch wirkenden Strukturen erzielt werden kann.

Es ist vorgesehen, dass das hydrodynamisch wirkende Lager aus zumindest zwei Materialien mit unterschiedlichen Wärmeausdehnungskoeffizienten gebildet ist und dass die hydrodynamische Struktur durch unterschiedliche Volumenausdehnungen der Materialien bei der jeweils herrschenden Betriebstemperatur ausgebildet ist. So kann es vorgesehen sein, dass bei Raum- bzw. Umgebungstemperatur keine hydrodynamischen Strukturen ausgebildet sind. Erst während des Betriebs des hydrodynamisch wirkenden Lagers und der damit verbundenen Temperaturerhöhung dehnen sich Bereiche des Lagers aus einem ersten Material stärker aus als benachbarte Bereiche aus einem zweiten Material. Das Material mit dem größeren thermischen Ausdehnungskoeffizienten ist dabei beispielsweise im Bereich der Erhebungen angeordnet, während das Material mit dem kleineren thermischen Ausdehnungskoeffizienten zumindest im Bereich der Senken vorliegt.

Gleichmäßige und stufenfreie Übergänge zwischen benachbarten Materialien können insbesondere auch bei Materialien mit unterschiedlichen thermischen Ausdehnungskoeffizienten dadurch erreicht werden, dass die zumindest zwei Materialien an Grenzflächen aneinander liegen und dass die zumindest zwei Materialien an den Grenzflächen zumindest bereichsweise stoffschlüssig und/oder kraftschlüssig miteinander verbunden sind. Bei einer stärkeren thermischen Dehnung des einen Materials gegenüber dem anderen Material bilden sich so in den Grenzbereichen zwischen den Materialien Schrägen und keine stufigen Übergänge aus.

Eine denkbare Erfindungsvariante ist dergestalt, dass das Lager aus einem Polymerwerkstoff gebildet ist oder dass das Lager aus einer Kombination zumindest eines ersten Polymerwerkstoffs mit einem zweiten Polymerwerkstoff gebildet ist oder dass das Lager aus einer Kombination zumindest eines ersten Polymerwerkstoffs mit einem Nicht-Polymerwerkstoff, insbesondere einem Metall, einer Keramik oder einem mineralischen Werkstoff, gebildet ist. Polymerwerkstoffe sind kostengünstig, einfach zu bearbeiten und weisen eine niedrige Haftreibung auf. Sie sind weiterhin chemisch beständig und elastisch verformbar. Dadurch können kostengünstig hydrodynamisch wirkende Lager hergestellt werden, welche dem Beginn einer Bewegung nur eine geringe Kraft entgegensetzen und auch im Bereich der Mischreibung des hydrodynamisch wirkenden Lagers nur geringe Reibungsverluste aufweisen. Durch die Kombination von zwei Polymerwerkstoffen können unterschiedliche Materialeigenschaften miteinander kombiniert werden. So können beispielsweise Bereiche mit einem größeren thermischen Ausdehnungskoeffizienten oder Elastizitätsmodul mit Bereichen mit einem geringeren thermischen Ausdehnungskoeffizienten oder Elastizitätsmodul verbunden werden. Durch Verwendung von Metall, Keramik oder mineralischen Werkstoffen können Bereiche mit stark voneinander abweichenden Materialeigenschaften kombiniert werden. Dadurch ist es beispielsweise möglich, mechanisch stark beanspruchte Bereiche durch entsprechend höher belastbare oder abriebsfestere Materialien auszubilden.

Bevorzugt kann es vorgesehen sein, dass die Bereiche der Erhebungen, insbesondere die Bereiche der Ruhekontaktflächen, aus einem Werkstoff mit höherer Festigkeit, zum Beispiel Metall oder Keramik und die Bereiche der Schrägen und/oder der Senken aus einem Werkstoff mit niedrigerer Festigkeit, zum Beispiel ein Polymerwerkstoff gebildet sind. Die Bereiche der Erhebungen und der Ruhekontaktflächen sind beim Anlaufen des hydrodynamisch wirkenden Lagers im direkten Kontakt mit der Gegenfläche und somit den stärksten mechanischen Belastung ausgesetzt. Durch die Ausbildung der Erhebungen und der Ruhekontaktflächen kann die mechanische Beanspruchung, zum Beispiel aus Metall kann der mechanische Verschleiß in diesen Bereichen sehr gering gehalten werden. Die Schrägen und/oder die Senken lassen sich zum Beispiel aus einem Polymerwerkstoff sehr genau entsprechend der Anforderungen formen, sodass die Tragkraft des hydrodynamisch wirkenden Lagers exakt vorgegeben werden kann.

Mittels thermischer Dehnung ausgebildete bzw. geformte, hydrodynamische Strukturen, welche im Vergleich der gegenüberliegenden Seiten des hydrodynamisch wirkenden Lagers winkelversetzt zueinander angeordnet sind, können dadurch erhalten werden, dass die erste und die zweite Seite des Lagers jeweils durch eine in Umfangsrichtung segmentartige und periodische Abfolge von zumindest zwei Materialien gebildet sind und dass die periodische Abfolge der Segmente der ersten Seite gegenüber der zweiten Seite winkelversetzt ist. Bei Erwärmung des hydrodynamisch wirkenden Lagers auf Betriebstemperatur denen sich die Segmente mit der höheren thermischen Dehnung stärker aus als die Segmente mit der niedrigeren thermischen Dehnung. Dadurch werden die Bereiche der Erhebungen und der Senken ausgebildet. Durch den Winkelversatz der Abfolge der Segmente zwischen den beiden Seiten des hydrodynamisch wirkenden Lagers sind auch die durch die thermische Ausdehnung ausgebildeten Erhebungen bzw. Senken zueinander winkelversetzt.

Eine mögliche Erfindungsvariante ist derart, dass im Bereich der Senken und zumindest in einem an die Senken angrenzenden Bereich der Schrägen zumindest bereichsweise ein Material mit einem vergleichsweise höheren thermischen Ausdehnungskoeffizient und zumindest im Bereich der Erhebungen ein Material mit einem vergleichsweise geringeren thermischen Ausdehnungskoeffizienten angeordnet ist. Dabei kann es beispielsweise vorgesehen sein, dass die hydrodynamisch wirkenden Strukturen bei Raum- bzw. Umgebungstemperatur zunächst sehr stark ausgebildet sind. Bei steigender Temperatur des hydrodynamisch wirkenden Lagers verringert sich auf Grund der unterschiedlichen Wärmeausdehnungskoeffizienten der Materialien der in Richtung der Flächennormalen der Mittenebene des Lagers gemessene Abstand zwischen den Senken und den Erhebungen. Dadurch werden eine geringere Steigung und damit ein größere hydrodynamische Wirkung der Schrägen erhalten. Dies gleicht eine verringerte Tragfähigkeit des durch die Temperaturerhöhung niedrigviskoseren Schmiermittels aus. Es wird so ein selbststellendes, hydrodynamisch wirkendes Lager erhalten.

In besonders vorteilhafter Weise kann es vorgesehen sein, dass die Fläche des hydrodynamisch wirksamen Bereichs der hydrodynamischen Strukturen einer Seite des hydrodynamisch wirkenden Lagers einen Anteil von 30% bis 70% der Gesamtfläche der jeweiligen Seite des hydrodynamisch wirkenden Lagers ausmacht, bevorzugt dass der Anteil in einem Bereich von 45 - 55% liegt, besonders bevorzugt dass der Anteil 50% beträgt. Der hydrodynamisch wirksame Bereich ist dabei der Anteil der Lageroberfläche, in dem sich durch die Relativbewegung zwischen dem Lager und dem angrenzenden Bauteil ein erhöhter Schmiermitteldruck ausbildet. Insbesondere bei einem Flächenausnutzungsgrad von 50% ergibt sich eine gute Tragwirkung des Lagers. Dabei berechnet sich der Flächenausnutzungsgrad als der Anteil der tragenden Fläche des Lagers bezogen auf dessen Gesamtfläche.

Eine seitenindividuelle Einstellung der Tragfähigkeit des hydrodynamisch wirkenden Lagers kann dadurch erreicht werden, dass die Fläche des hydrodynamisch wirksamen Anteils der hydrodynamischen Strukturen einer Seite des hydrodynamisch wirkenden Lagers größer ist als die Fläche des hydrodynamisch wirksamen Anteils der hydrodynamischen Strukturen der gegenüberliegenden Seite, insbesondere dass die Fläche des hydrodynamisch wirksamen Anteils der hydrodynamischen Strukturen einer Seite größer als 50% und die Fläche des hydrodynamisch wirksamen Anteils der hydrodynamischen Strukturen der gegenüberliegenden Seite kleiner als 50%, bezogen auf die Gesamtfläche der jeweiligen Seite, ist. Die Tragfähigkeit des hydrodynamisch wirkenden Lagers kann so für jede Seite des Lagers gesondert vorgegeben werden. Damit kann jede Seite des Lagers exakt an die Anforderungen, wie sie sich aus der Wechselwirkung mit dem jeweils angrenzenden Bauteil ergeben, angepasst werden.

Die Aufgabe der Erfindung wird dadurch gelöst, dass das Lager aus zumindest zwei Materialien mit unterschiedlichen Wärmeausdehnungskoeffizienten ausgebildet ist, derart, dass sie geeignet sind, die hydrodynamischen Strukturen wenigstens einer Seite des Lagers zumindest bereichsweise durch unterschiedliche Volumenausdehnung der Materialien bei der jeweils herrschenden Betriebstemperatur auszubilden. Das Lager kann beispielsweise bei Raum- oder Umgebungstemperatur beidseitig eben ausgeführt sein. Es bildet so zunächst eine große Kontakt- und Gleitfläche zu benachbarten Bauelementen aus. Bei steigenden Temperaturen dehnen sich die Bereiche, die aus einem Material mit einem höheren Wärmeausdehnungskoeffizienten hergestellt sind, stärker aus als die benachbarten Bereiche, welche aus einem Material mit einem niedrigeren Wärmeausdehnungskoeffizienten bestehen. Dadurch bilden sich im Bereich des Materials mit dem höheren Wärmeausdehnungskoeffizienten Erhebungen und im Bereich des Materials mit dem niedrigeren Wärmeausdehnungskoeffizienten Senken aus, welche über Schrägen ineinander übergehen. Ebenfalls möglich ist es, die Erhebungen, Senken und Schrägen bereits bei Raumtemperatur auszubilden. Ist dann im Bereich der Senken das Material mit einem niedrigeren Wärmeausdehnungskoeffizienten und im Bereich der Erhebungen das Material mit einem höheren Wärmeausdehnungskoeffizienten angeordnet, so verringert sich mit steigender Temperatur der in Richtung der Flächennormalen der Mittenebene des hydrodynamisch wirkenden Lagers gemessene Abstand zwischen den Senken und den benachbarten Erhebungen. Dadurch verringert sich die Neigung der zwischen den Senken und den benachbarten Erhebungen ausgebildeten Schrägen. Durch die verringerte Neigung verstärkt sich die hydrodynamische Wirkung der Schrägen und damit der im Bereich der Schrägen aufgebaute Druck des Schmiermittels. Dies wirkt der bei erhöhten Temperaturen verringerten Viskosität des Schmiermittels entgegen, welche ansonsten zu einer Verringerung des hydrodynamisch ausgebildeten Drucks führt.

Die Erfindung wird im Folgenden anhand der in den Zeichnungen dargestellten Ausführungsbeispiele näher erläutert. Es zeigen:
- Fig. 1: in einer perspektivischen Seitenansicht ein hydrodynamisch wirkendes Lager in Form einer Anlaufscheibe mit auf beiden ihrer Seiten angeordneten, hydrodynamisch wirkenden Strukturen,
- Fig. 2: in einer perspektivischen Seitenansicht ein hydrodynamisch wirkendes Lager in Form einer Anlaufscheibe mit versetzt angeordneten Erhebungen,
- Fig. 3: in einer schematischen Seitenansicht einen Ausschnitt eines hydrodynamisch wirkenden Lagers in Form einer Anlaufscheibe mit ausgebildeten Ruhekontaktflächen,
- Fig. 4: das in Figur 3 gezeigte hydrodynamisch wirkende Lager in einer Draufsicht,
- Fig. 5: in einer Draufsicht ein hydrodynamisch wirkendes Lager in Form einer Anlaufscheibe mit einem inneren und einem äußeren Staurand,
- Fig. 6: in einer Seitenansicht ein hydrodynamisch wirkendes Lager in Form einer Anlaufscheibe mit unterschiedlicher Anzahl von Erhebungen und Senken auf den gegenüberliegenden Seiten des Lagers,
- Fig. 7: in einer perspektivischen Seitenansicht ein hydrodynamisch wirkendes Lager in Form einer Anlaufscheibe mit unterschiedlicher Anzahl von Erhebungen und Senken und einem Versatz der Erhebungen auf den gegenüberliegenden Seiten des Lagers,
- Fig. 8: in einer perspektivischen Seitenansicht ein hydrodynamisch wirkendes Lager in Form einer Anlaufscheibe mit unterschiedlicher Anzahl von Erhebungen und Senken und einem maximalen Versatz der Erhebungen auf den gegenüberliegenden Seiten des Lagers,
- Fig. 9: in einer Draufsicht ein hydrodynamisch wirkendes Lager in Form einer Anlaufscheibe mit gekrümmt verlaufenden Senken,
- Fig. 10: in einer Draufsicht ein hydrodynamisch wirkendes Lager in Form einer Anlaufscheibe mit in ihrer Kontur variierenden hydrodynamischen Strukturen,
- Fig. 11: in einer Draufsicht ein hydrodynamisch wirkendes Lager in Form einer Anlaufscheibe mit aus unterschiedlichen Materialien gefertigten Segmenten,
- Fig. 12: in einer perspektivischen Seitenansicht ein hydrodynamisch wirkendes Lager in Form einer Anlaufscheibe mit Materialeinlagen aus einem unterschiedlichen Material,
- Fig. 13: in einer perspektivischen Seitenansicht ein hydrodynamisch wirkendes Lager in Form einer Anlaufscheibe mit Materialeinlagen aus einem unterschiedlichen Material in einer weiteren Ausführungsform,
- Fig. 14: das in Figur 13 gezeigte, hydrodynamisch wirkende Lager mit zusätzlichen Schmierstoffnuten,
- Fig. 15: in einer perspektivischen Seitenansicht ein für eine Drehrichtung ausgelegtes, hydrodynamisch wirkendes Lager in Form einer Anlaufscheibe und
- Fig. 16: in einer perspektivischen Seitenansicht ein hydrodynamisch wirkendes Lager in Form einer Anlaufscheibe mit einer dreidimensionalen Prägung.

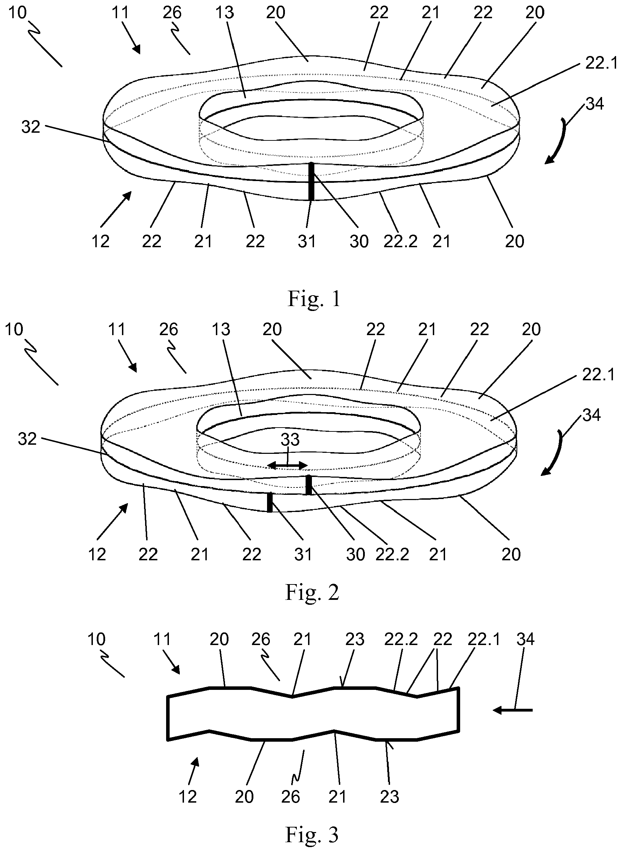

Figur 1 zeigt in einer perspektivischen Seitenansicht ein hydrodynamisch wirkendes Lager 10 in Form einer Anlaufscheibe mit auf beiden ihrer Seiten 11, 12 angeordneten, hydrodynamisch wirkenden Strukturen 26. Die hydrodynamisch wirkenden Strukturen 26 sind vorliegend durch in Umfangsrichtung des hydrodynamisch wirkenden Lagers 10 periodisch angeordnete Abfolgen von Erhebungen 20 und Senken 21 gebildet. Zwischen den Erhebungen 20 und Senken 21 sind Schrägen 22 ausgebildet, welche diese verbinden. Wie durch eine erste Markierung 30 und eine zweite Markierung 31 gezeigt ist, sind die Erhebungen 20 der ersten Seite 11 des hydrodynamisch wirkenden Lagers 10 exakt gegenüberliegend zu den Erhebungen der zweiten Seite des Lagers 10 angeordnet. Entsprechend sind auch die Senken 21 und die Schrägen 22 der beiden Seiten 11, 12 jeweils gegenüberliegend angeordnet. Eine Mittenebene 32 des Lagers 10 ist markiert. Zur Aufnahme einer Achse oder Welle weist das hydrodynamisch wirkende Lager 10 eine zentrische Durchführung 13 auf.

Das in Figur 1 gezeigte, hydrodynamisch wirkende Lager 10 ist somit bezogen auf seine Mittenebene 32 symmetrisch aufgebaut. Die hydrodynamisch wirkenden Strukturen 26 sind in beide Umfangsrichtungen gleich ausgebildet und damit richtungsunabhängig wirksam. Entsprechend muss das hydrodynamisch wirkende Lager 10 vorteilhaft nicht orientiert montiert werden.

Vorliegend ist das Lager 10 aus einem Polymerwerkstoff mittels Urformen hergestellt. Es ist jedoch auch denkbar, die hydrodynamisch wirkenden Strukturen 26 mittels prägen oder spanend einzuarbeiten. Die Tiefe der Senken 21 gegenüber den Erhebungen 20 liegt in einem Bereich von 5-20 µm. Die Steigung der Schrägen 22 beträgt ca. 1 µm/mm.

Zur Erklärung der Funktion des hydrodynamisch wirkenden Lagers 10 ist eine mögliche Bewegungsrichtung 34 durch einen Pfeil gekennzeichnet. Auf Grund der Symmetrie des Lagers 10 kann es auch so verwendet werden, dass die Bewegungsrichtung 34 in die entgegengesetzte Richtung zeigt. Die Bewegungsrichtung kennzeichnet die relative Bewegung vorliegend der ersten Seite 11 des Lagers 10 gegenüber einem an der ersten Seite 11 anliegenden Bauteil. Dabei kann sich tatsächlich sowohl das Lager 10 entsprechend der gezeigten Bewegungsrichtung 34 als auch das angrenzende Bauteil in die entgegengesetzte Richtung bewegen. Die in Bewegungsrichtung 34 geneigten Schrägen 22 stellen anlaufende Schrägen 22.1 dar, während die entgegen der Bewegungsrichtung 34 geneigten Schrägen 22 abfallende Schrägen 22.2 ausbilden. Dabei sind die anlaufenden Schrägen 22.1 und die abfallenden Schrägen 22.2 vorliegend gleichartig ausgeführt und wechseln ihre Funktionen bei entgegengesetzter Bewegungsrichtung 34.

Montiert liegt das hydrodynamisch wirkende Lager 10 bei Stillstand zumindest mit einem Teil seiner Erhebungen 20 an den gegenüberliegend angrenzenden Bauteilen an. Dabei kann es sich beispielsweise um Teile eines Getriebes handeln. Das Lager 10 ist zentral durch eine durch die Durchführung 13 geführte Welle oder Achse gehalten. Mit Beginn des Betriebes beginnt sich zumindest eines der angrenzenden Bauteile und gegebenenfalls die Welle bzw. Achse zu drehen. Dabei wird dem Lager 10 ein Schmierstoff, beispielsweise Schmieröl, zugeführt. Die anfängliche Haftreibung zwischen dem Lager 10 und den angrenzenden Bauteilen geht zunächst in eine Mischreibung (Gleit- und Flüssigkeitsreibung) über. Mit steigender Drehzahl baut sich entlang der anlaufenden Schrägen 22.1 und über den angrenzenden Erhöhungen ein hydrodynamisch erhöhter Druck des Schmierstoffs auf. Dies führt dazu, dass das Lager 10 auch mit seinen Erhöhungen 20 nicht mehr an den benachbarten Bauteilen anliegt, sondern sich ein Flüssigkeitsfilm zwischen den gegenüberliegenden Seiten 11, 12 des Lagers 10 und den jeweils angrenzenden Bauteilen ausbildet. Der Flüssigkeitsfilm führt zu einer reinen Flüssigkeitsreibung zwischen dem Lager 10 und den angrenzenden Bauteilen, wodurch sich ein sehr geringer Reibungswiderstand ergibt.

Die hydrodynamische Ausbildung des erhöhten Drucks des Schmierstoffs ist stark von der Ausbildung der hydrodynamischen Strukturen 26 abhängig. Die Tragfähigkeit des hydrodynamisch wirkenden Lagers 10 hängt somit wesentlich von der Ausbildung und Anordnung der hydrodynamischen Strukturen 26 während des Betriebs des Lagers 10 ab. Dabei hat insbesondere die Neigung der anlaufenden Schrägen 22.1 einen wesentlichen Anteil an der erreichten Druckerhöhung.

Erfindungsgemäß sind zumindest ein Teil der Erhebungen 20 der hydrodynamischen Strukturen 26 der ersten Seite 11 des Lagers 10 im Bereich zwischen zwei Senken 21 der hydrodynamischen Strukturen 26 der zweiten Seite 12 des Lagers 10 angeordnet. Damit variiert die Dicke des hydrodynamisch wirkenden Lagers 10 in Umfangsrichtung. Weiterhin sind in dem in Figur 1 gezeigten Ausführungsbeispiel die auf den beiden Seiten 11, 12 des Lagers 10 angeordneten Erhebungen 20 genau gegenüberliegend zueinander angeordnet. Ein axial auf das hydrodynamisch wirkende Lager 10 einwirkender Druck führt somit zu einer Deformation des Lagers 10, welche nur alleine auf der Elastizität des verwendeten Werkstoffs beruht. Die auf Basis einer Geometrie elastische Federwirkung wird in diesem Fall nicht genutzt. Damit unterscheidet sich das in Figur 1 gezeigte, erfindungsgemäße Lager 10 maßgeblich von bekannten hydrodynamisch wirkenden Lagern 10, welche in Umfangsrichtung eine gleichbleibende Materialstärke aufweisen, wodurch die Erhebungen 20 einer Seite 11, 12 jeweils gegenüberliegend zu einer Senke 21 der anderen Seite 11, 12 des Lagers 10 angeordnet sind. Bei einer solchen bekannten Ausbildung des Lagers 10 kann dieses im Einsatz vollständig zusammengedrückt werden, wodurch seine hydrodynamischen Eigenschaften verloren gehen. Dies gilt insbesondere, weil in Umfangsrichtung die gegenüberliegenden Erhebungen 20 einen großen Abstand zueinander aufweisen, wodurch sich ein langer Hebel zwischen ihnen ergibt, welcher bei einem axial einwirkenden Druck zu einer entgegen der Neigung der Schrägen 22 gerichteten Verbiegung des hydrodynamisch wirkenden Lagers führt. Konstruktiv kann bei solchen bekannten Lagern bei eingeschränkt möglicher Materialauswahl und vorgegebenen, axialen Platzverhältnissen lediglich der Abstand zwischen den Erhebungen 20 und den benachbarten Senken 21 in Umfangsrichtung verändert werden, um eine erhöhte Stabilität gegenüber axial einwirkenden Kräften zu erreichen. Dadurch wird jedoch auch die Wirkung der hydrodynamisch wirkenden Strukturen 26 beeinflusst. Demgegenüber kann bei dem in Figur 1 gezeigten, erfindungsgemäßen hydrodynamisch wirkenden Lager 10 die Position der Erhebungen 20 und der Senken 21 sowie die Neigung der Schrägen 22, 22.1, 22.2 frei gewählt werden. Diese bleiben auch bei hohen, axial auf das Lager 10 einwirkenden Drücken erhalten. Dadurch kann das Lager 10 exakt an die jeweiligen Anforderungen und die vorliegende Einbausituation angepasst werden.

Figur 2 zeigt in einer perspektivischen Seitenansicht das hydrodynamisch wirkende Lager 10 in Form einer Anlaufscheibe mit versetzt angeordneten Erhebungen 20. Gleiche Bauteile und Bereich des Lagers 20 sind dabei wie zu Figur 1 eingeführt bezeichnet.

Entgegen der in Figur 1 gezeigten Ausführungsvariante des hydrodynamisch wirkenden Lagers 10 sind vorliegend die Erhebungen 20 der ersten Seite 11 winkelversetzt zu den Erhebungen 20 der zweiten Seite 12 des Lagers 10 angeordnet. Damit ist in Umfangsrichtung jeweils ein Hebelarm 33 zwischen einer Erhebung 20 der ersten Seite 11 und der nächstliegenden Erhebung 20 der gegenüberliegenden zweiten Seite 12 des hydrodynamisch wirkenden Lagers 10 ausgebildet. Der Hebelarm 33 ist durch einen zwischen den beiden die Lage der Erhebungen 20 kennzeichnenden Markierungen 30, 31 angeordneten Doppelpfeil dargestellt und verändert sich entlang des Radius des Lagers 10. Entsprechend der Erhebungen 20 sind auch die Senken 21 und damit die Schrägen 22 der gegenüberliegenden Seiten 11, 12 des Lagers 10 winkelversetzt zueinander angeordnet.

Bei einem während des Betriebs axial auf das hydrodynamisch wirkende Lager 10 einwirkenden Druck wird das Lager 10 dahingehend verformt, dass sich der in Achsrichtung gemessene Abstand zwischen den an den gegenüberliegenden Seiten 11, 12 angeordneten Erhebungen 20 verringert. Dadurch verringert sich auch die Neigung der Schrägen 22, 22.1, 22.2. Wie stark sich das Lager 10 bei einem einwirkenden Druck verformt, hängt neben den mechanischen Eigenschaften und der Dicke des Materials des Lagers 10 wesentlich von dem in Umfangsrichtung gemessenen Abstand zwischen den an den gegenüberliegenden Seiten 11, 12 des Lagers 10 angeordneten, benachbarten Erhebungen 20 und damit von der Länge des ausgebildeten Hebelarms 33 ab. Ein langer Hebelarm 33 führt zu einer vergleichsweise starken Veränderung der Neigung der Schrägen 22, 22.1, 22.2, während ein kurzer Hebelarm 33 zu einer vergleichsweise geringen Veränderung der Neigung der Schrägen 22, 22.1, 22.2 führt. Eine geringer geneigte Schräge 22, 22.1, 22.2 führt zu einem erhöhten hydrodynamisch ausgebildeten Druck und damit zu einer erhöhten Tragfähigkeit des Lagers 10. Durch die auf den gegenüberliegenden Seiten 11, 12 des hydrodynamisch wirkenden Lagers 10 winkelversetzt angeordneten Erhebungen 20 wird somit erreicht, dass sich die Tragfähigkeit des Lagers 10 selbsttätig an die jeweils vorliegende, axialer Belastung anpasst. Dabei kann durch entsprechende Wahl des in Umfangsrichtung gemessenen Abstands zwischen an gegenüberliegenden Seiten 11, 12 des Lagers 10 benachbart angeordneten Erhebungen 20 die Anpassung der Tragfähigkeit an wechselnde axialer Belastungen vorgegeben werden. Es können somit aus gleichem Material hergestellte, hydrodynamisch wirkende Lager 10 mit gleicher Gesamtdicke bereitgestellt werden, welche eine unterschiedliche Veränderung ihrer Tragfähigkeit bei einer einwirkenden axialen Belastung aufweisen. Dadurch kann das hydrodynamisch wirkende Lager 10 optimal an die erwartete Belastung angepasst werden, ohne dass dazu ein anderes Material verwendet oder die Gesamtdicke des Lagers 10 verändert werden muss.

Figur 3 zeigt in einer schematischen Seitenansicht einen Ausschnitt des hydrodynamisch wirkenden Lagers 10 in Form einer Anlaufscheibe mit ausgebildeten Ruhekontaktflächen 23. Gleiche Bauteile und Bereich des Lagers 20 sind dabei wie zuvor eingeführt bezeichnet.

Die Ruhekontaktflächen 23 sind im Bereich der Erhebungen 20 des hydrodynamisch wirkenden Lagers 10 angeordnet. Die Ruhekontaktflächen 23 einer Seite 11, 12 sind jeweils in einer gemeinsamen Ebene angeordnet. Dabei sind die Ruhekontaktflächen 23 planparallel zur Mittenebene des hydrodynamisch wirkenden Lagers 10 ausgerichtet.

Die hydrodynamisch wirkenden Strukturen 26 des Lagers 10 sind auf beiden Seiten 11, 12 gleich ausgebildet. Damit ist keine Montagerichtung vorgegeben. Die Ruhekontaktflächen 23 und damit die Erhebungen 20 sind auf den gegenüberliegenden Seiten 11, 12 des Lagers 10 winkelversetzt zueinander angeordnet, wie dies in seiner Auswirkung bereits zu Figur 2 beschrieben ist.

Durch die Ruhekontaktflächen 23 ist im Stillstand eine vergrößerte Kontaktfläche zwischen dem hydrodynamisch wirkenden Lager 10 und den angrenzenden Bauteilen gebildet. Dies erleichtert den Bewegungsbeginn. Im Betrieb steigt der Druck jeweils über der anlaufenden Schräge 22.1 an und erreicht sein Maximum über der anschließenden Ruhekontaktfläche 23. Durch die Auslegung der anlaufenden Schrägen 22.1 und der Ruhekontaktflächen 23 kann somit der Anteil der tragenden Fläche gegenüber der Gesamtfläche einer Seite 11, 12 des hydrodynamisch wirkenden Lagers 10 vorgegeben werden. Dabei ist als tragende Fläche der Bereich einer Seite 11, 12 des hydrodynamisch wirkenden Lagers 10 bezeichnet, über dem durch die hydrodynamische Wirkung der hydrodynamisch wirkenden Strukturen 26 eine Druckerhöhung des Schmierstoffs stattfindet. Vorzugsweise sind die hydrodynamisch wirkenden Strukturen 26 derart ausgelegt, dass sich ein Flächenausnutzungsgrad im Bereich von 0,3-0,7 ergibt. Der Flächenausnutzungsgrad ist der Anteil der tragenden Fläche bezogen auf die Gesamtfläche einer Seite 11, 12 des hydrodynamisch wirkenden Lagers 10. Besonders bevorzugt liegt der Flächenausnutzungsgrad bei ca. 0,5.

Die in Figur 3 gezeigten Ruhekontaktflächen 23 bilden sich vorzugsweise während des Betriebs des hydrodynamisch wirkenden Lagers 10 aus. Ausgehend von einem hydrodynamisch wirkenden Lager 10, wie es in Figur 2 ohne Ruhekontaktflächen 23 gezeigt ist, reiben die Erhebungen 20 zunächst an den angrenzenden Bauteilen. Dazu ist das hydrodynamisch wirkende Lager 10 im Neuzustand derart ausgelegt, dass sich noch keine durchgängige Flüssigkeitsreibung ergibt. Durch die Festkörperreibung und dem damit verbundenen Verschleiß werden die Kuppen der Erhebungen 20 abgerieben, wodurch sich die Ruhekontaktflächen 23 ausbilden. Im Bereich der gebildeten Ruhekontaktflächen 23 wird der hydrodynamische Druck auf dieser Fläche langsam auf Umgebungsdruck abgebaut, wodurch sich eine zusätzliche Tragfähigkeit ergibt und die Gesamttragfähigkeit gesteigert wird . Ist durch den fortschreitenden Abrieb der Erhebungen 20 und der damit verbundenen Vergrößerung der Ruhekontaktflächen 23 der Druck groß genug, bildet sich ein durchgängiger Schmierstofffilm aus. Ab diesem Zeitpunkt stehen die Erhebungen 20 des hydrodynamisch wirkenden Lagers 10 im Betrieb nicht mehr in direktem Kontakt mit den angrenzenden Bauteilen und es liegt eine reine Flüssigkeitsreibung vor. Das hydrodynamisch wirkende Lager 10 schleift sich demnach selbsttätig dahingehend ein, dass bei der vorliegenden Belastung ein ausreichend hoher, hydrodynamischer Druck aufgebaut wird, um die gewünschte verlustarme Flüssigkeitsreibung zu erreichen. Dies ist insbesondere bei als Anlaufscheiben ausgebildeten, hydrodynamisch wirkenden Lagern 10 vorteilhaft, da bei diesen die axial einwirkenden Kräfte nicht im Detail bekannt sind.

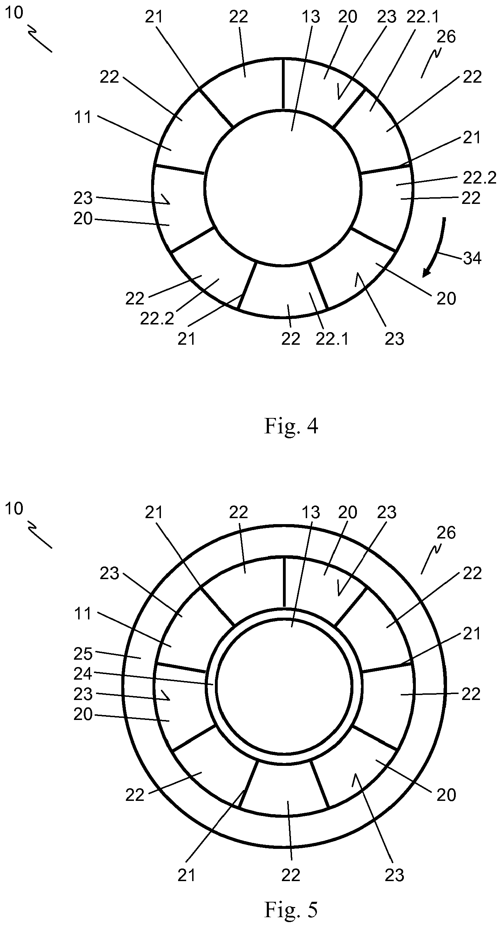

Figur 4 zeigt das in Figur 3 gezeigte, hydrodynamisch wirkende Lager 10 in einer Draufsicht. Dabei erfolgt die Draufsicht auf die erste Seite 11 des hydrodynamisch wirkenden Lagers 10, welche jedoch, abgesehen von dem bereits beschriebenen Winkelversatz, entsprechend der zweiten Seite 12 aufgebaut ist. Die hydrodynamisch wirkenden Strukturen 26 sind als in Umfangsrichtung verlaufende, periodische Folge von abfallenden Schrägen 22.2, Senken 21, anlaufenden Schrägen 22.1 und die Erhebungen 20 bildenden Ruhekontaktflächen 23 ausgebildet. Die Schrägen 22, 22.1, 22.2 und die Ruhekontaktflächen 23 sind dabei jeweils als Winkelsegment der jeweiligen Seite 11, 12 des hydrodynamisch wirkenden Lagers 10 ausgebildet. In der gezeigten Ausführungsvariante überdeckt jedes der Segmente einen gleichen Winkelbereich. Es ist jedoch auch denkbar, dass die abfallenden Schrägen 22.2 und/oder die anlaufenden Schrägen 22.1 und/oder die Ruhekontaktflächen 23 jeweils unterschiedliche Winkelbereiche einnehmen.

Figur 5 zeigt in einer Draufsicht das hydrodynamisch wirkende Lager 10 in Form einer Anlaufscheibe mit einem inneren und einem äußeren Staurand 24, 25. Die hydrodynamisch wirkenden Strukturen 26 sind entsprechend des in den Figuren 3 und 4 gezeigten Ausführungsbeispiels ausgebildet und bezeichnet. Der innere und der äußere Staurand 24, 25 grenzen die hydrodynamisch wirkenden Strukturen 26 im Bereich der Senken 21 und der Schrägen 22 radial nach innen und nach außen ab. Dadurch wird vermieden, dass der Schmierstoff aus dem Bereich der hydrodynamisch wirkenden Strukturen 26 verdrängt wird. Der innere Staurand 24 und/oder der äußere Staurand 25 können in Umfangsrichtung definierte Konturen aufweisen, wobei zum Zwecke des Schmierstoff-Austausches Unterbrechungen, sowohl im inneren als auch äußeren Staurand 24 und 25 vorgesehen sein müssen. Diese können vorzugsweise im Bereich der Senken 21 oder am Anfang der Schrägen 22, im Übergangsbereich zu den Senken 21 angeordnet sein. Sie können insbesondere als radial geöffnete Fließbereiche für den Schmierstoff ausgebildet sein.

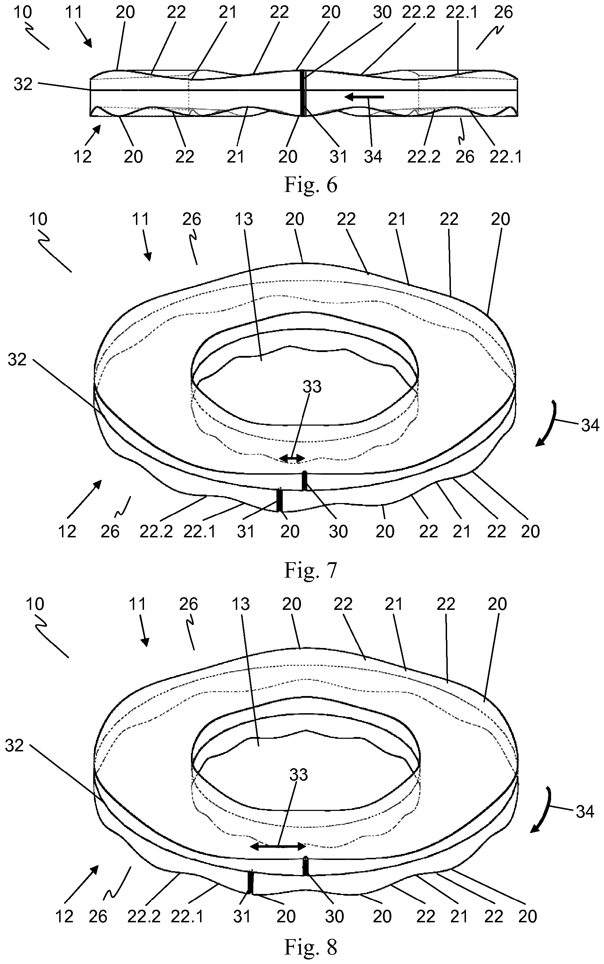

Figur 6 zeigt in einer Seitenansicht das hydrodynamisch wirkende Lager 10 in Form einer Anlaufscheibe mit unterschiedlicher Anzahl von Erhebungen 20 und Senken 21 auf den gegenüberliegenden Seiten 11, 12 des Lagers 10. Vorliegend ist die Teilung der hydrodynamisch wirkenden Strukturen 26 derart gewählt, dass gegenüberliegend zu einer Erhebung 20 und einer Senke 21 der ersten Seite 11 jeweils mehrere Erhebung 20 der zweiten Seite 12 des hydrodynamisch wirkenden Lagers 10 angeordnet sind. Durch die unterschiedliche Teilung der auf den gegenüberliegenden Seiten 11, 12 des hydrodynamisch wirkenden Lagers 10 angeordneten, hydrodynamisch wirkenden Strukturen 26 kann jeder der Seiten 11, 12 ein unterschiedliches Reibungs- und Tragverhalten zugewiesen werden. Eine solche erfindungsgemäße Variante kann aufgrund dieser Eigenschaft mit sehr hohen Drehzahlen betrieben werden. Das Bauteil kann sich ähnlich dem Betriebsverhalten einer Schwimmbuchsenlagerung, basierend auf den unterschiedlichen Reibungsverhalten der gegenüberliegenden Seiten mitdrehen und das Geschwindigkeitsgefälle von Spurscheibe zum Gehäuse in Stufen abbauen. Damit wird erreicht, dass auf der Seite, welche der drehenden Spurscheibe gegenübersteht die hydrodynamisch wirkende Geschwindigkeit erhöht und die Relativgeschwindigkeit reduziert wird. Damit ergibt sich auf dieser Seite eine Tragfähigkeitssteigerung bei gleichzeitiger Reibungsreduzierung. Die Gesamttragfähigkeit und Reibung ergibt sich dann aus der Summe beider Seiten 11, 12. Über die unterschiedliche Anzahl der hydrodynamischen Strukturen kann dieses Verhalten angepasst werden. Ebenfalls denkbar ist es, auf den gegenüberliegenden Seiten 11, 12 des hydrodynamisch wirkenden Lagers 10 unterschiedliche hydrodynamisch wirkende Strukturen 26 vorzusehen, um eine Anpassung an die jeweils angrenzenden Bauteile zu ermöglichen. So kann beispielsweise auf der ersten Seite eine Wellenstruktur und auf der gegenüberliegenden, zweiten Seite eine hydrodynamisch wirkende Struktur, wie beispielsweise ein Staurand oder eine Keilflächen-Geometrie vorgesehen sein.

Figur 7 zeigt in einer perspektivischen Seitenansicht ein hydrodynamisch wirkendes Lager 10 in Form einer Anlaufscheibe mit unterschiedlicher Anzahl von Erhebungen 20 und Senken 21 und einem Versatz der Erhebungen 20 auf den gegenüberliegenden Seiten 11, des Lagers 10. Das gezeigte, hydrodynamisch wirkende Lager 10 weist somit auf seiner zweiten Seite 12 eine zur ersten Seite 11 unterschiedliche Teilung der hydrodynamisch wirkenden Strukturen 26 auf, wie dies bereits zu dem in Figur 6 gezeigten Ausführungsbeispiel beschrieben wurde. Abweichend zu dem in Figur 6 gezeigten Ausführungsbeispiel sind bei der in Figur 7 gezeigten Ausführungsvariante die Erhebungen 20 der zweiten Seite 11 winkelversetzt zu den benachbarten Erhebungen 20 auf der ersten Seite 12 angeordnet. Dadurch bildet sich der Hebelarm 33 zwischen den benachbarten Erhebungen 20 der gegenüberliegenden Seiten 11, 12 des hydrodynamisch wirkenden Lagers 10 aus. Dabei ist der Hebelarm 33, wie bereits zu Figur 2 beschrieben, in Umfangsrichtung des Lagers 10 ausgerichtet. Die von den Erhebungen 20 der ersten Seite 11 weiter beabstandeten Erhebungen 20 der zweiten Seite 12 sind entsprechend winkelversetzt zu den Senken 21 der ersten Seite 11 angeordnet.

Bei einem axial auf das hydrodynamisch wirkende Lager 10 einwirkenden Druck wird um die ausgebildeten Hebelarme 33 jeweils ein Drehmoment auf das hydrodynamisch wirkende Lager 10 übertragen. Dadurch wird das hydrodynamisch wirkende Lager 10 verformt, wodurch sich die Steigung der Schrägen 22, 22.1, 22.2 verändert. Durch eine solche Verformung verringert sich insbesondere die Neigung der anlaufenden Schrägen 22.1. Wie bereits zuvor beschrieben, führt eine solche verringerte Neigung zum Aufbau eines größeren hydrodynamischen Drucks, wodurch sich die Tragfähigkeit des hydrodynamisch wirkenden Lagers 10 erhöht. Figur 7 zeigt somit ein hydrodynamisch wirkendes Lager 10, dessen Tragfähigkeit auf jeder Seite 11, 12 individuell auf das jeweils angrenzende Bauteil eingestellt werden kann, wobei sich die Tragfähigkeit in Abhängigkeit von der jeweils vorliegenden, axialen Belastung selbsttätig nachstellt.

Figur 8 zeigt in einer perspektivischen Seitenansicht ein hydrodynamisch wirkendes Lager 10 in Form einer Anlaufscheibe mit unterschiedlicher Anzahl von Erhebungen 20 und Senken 21 und einem im Vergleich zu dem in Figur 7 gezeigten Ausführungsbeispiel maximalen Versatz der Erhebungen 20 auf den gegenüberliegenden Seiten 11, 12 des Lagers 10. Über diesen Versatz hinaus ergeben sich periodisch wiederkehrende Verformungseigenschaften. Dadurch sind geringere axiale Kräfte erforderlich, um eine entsprechende Verformung und damit ein Ansteigen der Tragfähigkeit des hydrodynamisch wirkenden Lagers 10 zu bewirken. Durch anpassen des Versatzes der hydrodynamisch wirkenden Strukturen 26 zwischen den beiden Seiten 11, 12 des hydrodynamisch wirkenden Lagers 10 und damit der Länge der ausgebildeten Hebelarm 33 kann somit die Fähigkeit des Lagers 10, seine Tragfähigkeit in Abhängigkeit von einem axial auf das Lager 10 einwirkenden Drucks anzupassen, beeinflusst werden. Dies ist insbesondere dann vorteilhaft, wenn aufgrund der weiteren Anforderung an das Lager 10 nur eine begrenzte Auswahl an Materialien mit ähnlichen mechanischen Eigenschaften zur Herstellung des Lagers 10 zur Verfügung steht oder wenn die gesamte Dicke des Lagers 10 nur in einem begrenzten Rahmen verändert werden kann, sodass beispielsweise eine gewünschte Versteifung des Lagers 10 nicht durch Verwendung eines anderen Materials oder einer größeren Materialstärke des Lagers 10 erreicht werden kann.

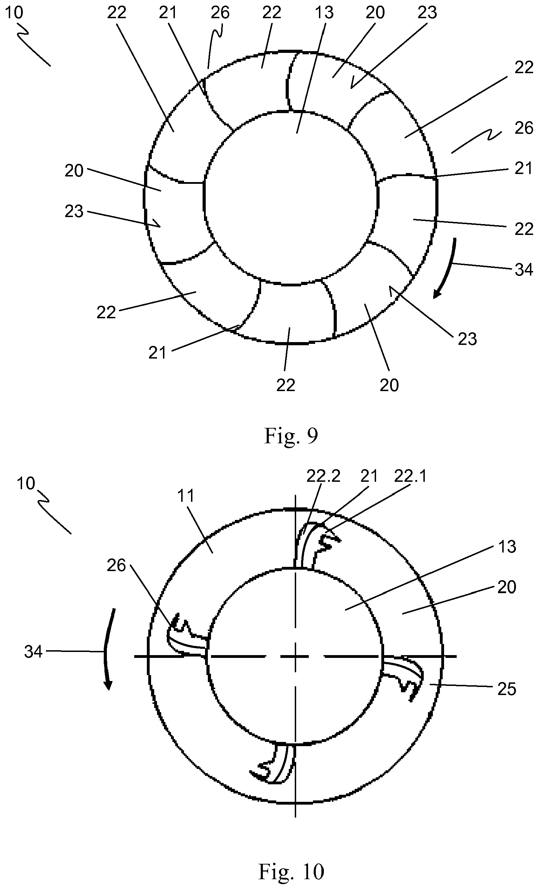

Figur 9 zeigt in einer Draufsicht ein hydrodynamisch wirkendes Lager 10 in Form einer Anlaufscheibe mit gekrümmt verlaufenden Senken 21. Ähnlich dem in den Figuren 3 und 4 gezeigten, hydrodynamisch wirkenden Lager 10 sind bei dem in Figur 9 gezeigten Ausführungsbeispiel die hydrodynamisch wirkenden Strukturen 26 durch eine periodische und segmentartige Abfolge von abfallenden Schrägen 22.2, Senken 21, anlaufenden Schrägen 22.1 und die Erhebungen 20 bildenden

Ruhekontaktflächen 23 ausgebildet. Die Senken 21 und die Übergänge zwischen den Schrägen 22 und den Ruhekontaktflächen 23 sind gekrümmt ausgebildet. Dabei sind die Innenseiten der Krümmungen vorliegend in Bewegungsrichtung 34 ausgerichtet. Die Bewegungsrichtung 34 stellt dabei wieder die Relativbewegung des hydrodynamisch wirkenden Lagers 10 gegenüber der Oberfläche eines zur ersten Seite 11 des Lagers 10 benachbart angeordneten Bauteils dar. Es ist denkbar, dass auch die Schrägen 22 entsprechend der Krümmung konkav geformt ausgeführt sind. Durch die Krümmung bildet sich eine Förderrichtung für den verwendeten Schmierstoff aus. Diese kann, wie im gezeigten Ausführungsbeispiel, vom äußeren Rand des hydrodynamisch wirkenden Lagers 10 nach innen gerichtet sein. Es ist jedoch auch denkbar, durch entsprechende Ausbildung der Krümmung eine von innen nach außen gerichtete Fördererrichtung auszubilden. Durch die Krümmung wird somit der Schmierstoff gezielt zwischen das hydrodynamisch wirkende Lager 10 und ein angrenzendes Bauteil eingesogen. Damit ist sichergestellt, dass sich immer eine ausreichende Menge an Schmierstoff zwischen dem hydrodynamisch wirkenden Lager 10 und dem angrenzenden Bauteil befindet.

Figur 10 zeigt in einer Draufsicht auf die erste Seite 11 ein hydrodynamisch wirkendes Lager 10 in Form einer Anlaufscheibe mit in ihrer Kontur variierenden hydrodynamischen Strukturen 26. Die hydrodynamisch wirkenden Strukturen weisen jeweils eine gekrümmt verlaufender Senke 21 auf. Zwischen den Senken 21 und den Erhebungen 20 ist jeweils eine anlaufende Schräge 22.2 ausgebildet. Diese weist zur angrenzenden Erhebung 20 hin einen ebenfalls gekrümmten Übergang auf. Die in Bewegungsrichtung 34 geneigten, anlaufenden Schrägen 22.1 weisen bereichsweise geradlinig und bereichsweise keilförmig verlaufende Übergänge zu den benachbarten Erhebungen 20 auf. Die anlaufenden Schrägen 22.1 verändern somit entlang des Radius des hydrodynamisch wirkenden Lagers 10 sowohl ihre Länge als auch ihre Neigung. Die Länge ist dabei jeweils in Umfangsrichtung zwischen einer Senke 21 und dem Übergang zur angrenzenden Erhebung 20 gemessen. Die Tiefe der Senken 21 gegenüber den Erhebungen 20 variiert mit steigendem Abstand von der Achse des hydrodynamisch wirkenden Lagers 10. Vorliegend nimmt die Tiefe der Senken 21 mit steigendem Radius ab. Die Senken 21 gehen somit zum Rand des hydrodynamisch wirkenden Lagers 10 hin in einen äußeren Staurand 25 über, welcher in der gleichen Ebene wie die Erhebungen 20 angeordnet ist.

Die dreidimensionale Topographie der hydrodynamisch wirkenden Strukturen 26 ist so ausgebildet, dass sie eine in radialer Richtung konstante oder auch variierende, sich keilförmig verengende und wieder öffnete Kontur ausbildet. Diese Kontur ist durch einen in Umfangsrichtung verlaufenden, äußeren Staurand 25 begrenzt. Durch die unterschiedliche Ausbildung der Länge und der Neigung der anlaufenden Schrägen 22.1 in Abhängigkeit vom Abstand zur Drehachse des hydrodynamisch wirkenden Lagers 10 verändert sich der aufgebaute, hydrodynamische Druck in Abhängigkeit vom Radius. Die Tragfähigkeit des hydrodynamisch wirkenden Lagers 10 kann so für unterschiedliche Radien unterschiedlich eingestellt werden. Damit kann die Tragfähigkeit exakt an die jeweils erwarteten Belastungen angepasst werden. Die Senken sind zur Durchführung 13 des hydrodynamisch wirkenden Lagers 10 hin geöffnet. Durch die Öffnungen kann Schmiermittel in die hydrodynamisch wirkenden Strukturen 26 eingeleitet werden. Es ist denkbar, an der gegenüberliegenden zweiten Seite 12 des hydrodynamisch wirkenden Lagers gleichartige hydrodynamisch wirkende Strukturen 26 vorzusehen. Diese können in die gleiche Richtung wie die hydrodynamisch wirkenden Strukturen 26 der ersten Seite 11 oder auch spiegelbildlich zu diesen ausgerichtet sein. Vorzugsweise weisen die hydrodynamisch wirkenden Strukturen 26 der beiden Seiten 11, 12 eine definierte Zuordnung zueinander auf.

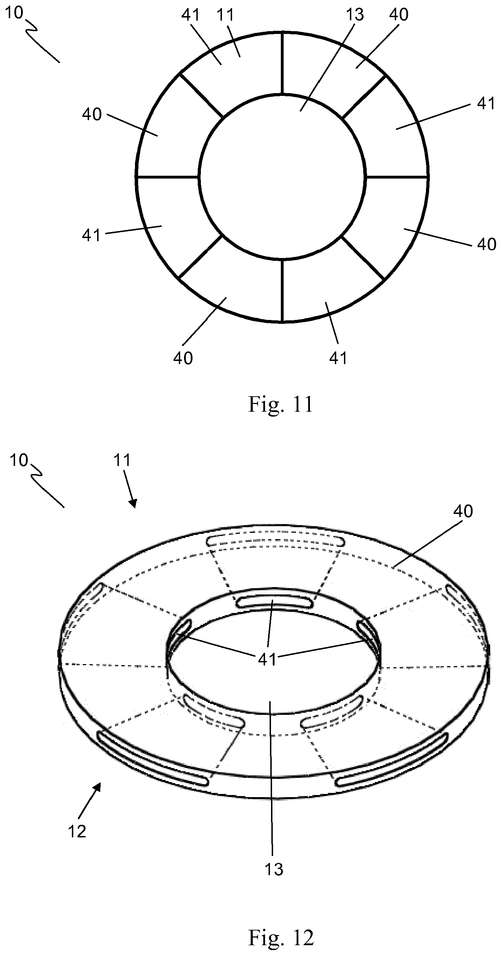

Figur 11 zeigt in einer Draufsicht ein hydrodynamisch wirkendes Lager 10 in Form einer Anlaufscheibe mit aus unterschiedlichen Materialien 40, 41 gefertigten Segmenten. Jedes Segment ist dabei durchgängig aus einem der Materialien 40, 41 gebildet. An den Grenzflächen sind die beiden Materialien 40, 41 jeweils fest, insbesondere form- oder kraftschlüssig, miteinander verbunden.

Die beiden Materialien 40, 41 weisen unterschiedliche Wärmeausdehnungskoeffizienten auf. So dehnt sich vorliegend das erste Material 40 bei einer Temperaturerhöhung weniger aus als das zweite Material 41. Das hydrodynamisch wirkende Lager 10 ist derart hergestellt, dass die beiden Materialien 40, 41 auf beiden Seiten 11, 12 bei Raumtemperatur in einer gleichen Ebene abschließen. Erwärmt sich das hydrodynamisch wirkende Lager 10 während des Betriebs, so bilden sich im Bereich des sich stärker ausdehnenden zweiten Materials 41 Erhebungen 20 und im Bereich der sich weniger ausdehnenden ersten Materials 40 Senken 21 aus. Bedingt durch die feste Verbindung der beiden Materialien 40, 41 an den jeweiligen Grenzflächen bilden sich in den Übergangsbereichen der Materialien 40, 41 Schrägen 22 aus. Die Erhebungen 20, die Senken 21 und die Schrägen 22 stellen hydrodynamisch wirkende Strukturen 26 dar. Diese prägen sich mit steigender Temperatur immer stärker aus.

Figur 12 zeigt in einer perspektivischen Seitenansicht ein hydrodynamisch wirkendes Lager 10 in Form einer Anlaufscheibe mit unterschiedlichen Materialien 40, 41.

Das hydrodynamisch wirkende Lager 10 ist aus einer Materialpaarung aus einem ersten Material 40 und Materialeinlagen aus einem zweiten Material 41 hergestellt. Dabei weist das erste Material 40 eine kleinere thermische Dehnung als das zweite Material 41 auf. Die Materialeinlagen sind mittels 2K-Technik segmentartig in das erste Material 40 eingespritzt bzw. das zweite Material 41 ist von dem ersten Material 40 umspritzt. Es ist auch denkbar, dass die Materialeinlagen aus dem zweiten Material 41 in entsprechend Aufnahmen des ersten Materials 40 eingesteckt sind. Bei Raumtemperatur sind die gegenüberliegenden Seiten 11, 12 des hydrodynamisch wirkenden Lagers 10 eben ausgeführt. Beim Aufwärmen während des Betriebs des Lagers 10 dehnen sich die Materialeinlagen aus dem zweiten Material 41 stärker aus als das umgebende erste Material 40. Dadurch bilden sich im Bereich der Materialeinlagen Erhebungen 20, im Bereich des ersten Materials 40 Senken 21 und dazwischenliegend Schrägen 22 aus. Die hydrodynamisch wirkenden Strukturen 26 werden somit beim Durchwärmen des hydrodynamisch wirkenden Lagers 10 ausgebildet. Dabei stehen sich die auf den beiden Seiten 11, 12, des Lagers 20 ausgebildeten Erhebungen 20 und die Senken 21 jeweils ohne Winkelversatz gegenüber.

Es ist auch denkbar, dass sich die beiden Materialien 40, 41 in ihrem Elastizitätsmodul unterscheiden. Im Betrieb wird dann das Material 40, 41 mit dem geringeren Elastizitätsmodul durch den auf das Lager 10 einwirkenden, axialen Druck stärker verformt als das Material 40, 41 mit dem geringeren Elastizitätsmodul. Weisen beispielsweise die Materialeinlagen einen größeren Elastizitätsmodul als das umgebende erste Material 40 auf, so wird der Bereich des ersten Materials 40 stärker verformt als der Bereich, in dem die Materialeinlagen angeordnet sind. Damit bilden sich im Bereich des ersten Materials 40 Senken 21 und im Bereich der Materialeinlagen aus dem zweiten Material 41 Erhebungen 20 mit dazwischen angeordneten Schrägen 22 aus, wodurch die hydrodynamisch wirkenden Strukturen 26 gebildet sind.

Es ist ebenfalls denkbar, anstelle der Materialeinlagen aus dem zweiten Material 41 Ausnehmungen in dem ersten Material 40 vorzusehen. Unter Ausnutzung der Elastizität des ersten Materials 40 bilden sich bei einem axial auf das Lager 10 einwirkenden Druck im Bereich der Ausnehmungen Senken 21 aus, während sich in den angrenzenden, durchgängig aus dem ersten Material 40 gebildeten Bereichen Erhebungen ausbilden.

Erfindungsgemäß bilden sich bei den zwei Materialien 40, 41 unterschiedlicher thermischer Dehnung bzw. unterschiedlicher Elastizität oder bei der gezeigten Kombination aus einem durchgängigen Material mit eingebrachten Ausnehmungen die hydrodynamisch wirkenden Strukturen selbsttätig beim Betrieb des hydrodynamisch wirkenden Lagers 10 aus. Im Ruhezustand können die beiden Seiten 11, 12 des Lagers 10 eben ausgeführt sein. Dadurch ergibt sich ein leichtgängiger Anlauf des Lagers 10. Es ist ebenfalls denkbar, dass hydrodynamische Lager 10 derart auszuführen, dass bereits ohne Temperaturerhöhung oder äußeren axialen Druck hydrodynamisch wirkende Strukturen 26 ausgebildet sind. Diese werden dann beim Betrieb des hydrodynamisch wirkenden Lagers 10 stärker ausgeprägt.

Es ist denkbar, bei Verwendung zweier Materialien 40, 41 mit unterschiedlicher thermischer Dehnung bereits bei Raumtemperatur entsprechend stark ausgeprägte, hydrodynamisch wirkende Strukturen 26 vorzusehen. Diese können urformend, spanend oder mittels Prägung hergestellt sein. Beispielsweise können im Bereich der Materialeinlagen aus dem zweiten Material Senken 21 und in dem aus dem ersten Material 40 gebildeten Bereich zwischen den Materialeinlagen Erhebungen 20 ausgebildet sein. Die Schrägen 22 sind dann zwischen den Senken 21 und den Erhebungen 20 angeordnet. Weist bei dieser Ausführungsvariante das zweite Material 41 eine größere thermische Dehnung als das erste Material 40 auf, so verringert sich bei steigender Temperatur des hydrodynamisch wirkenden Lagers 10 während des Einsatzes die Tiefe der Senken 21 gegenüber den Erhebungen 20. Dadurch verringert sich auch die Neigung der Schrägen 22. Geringer geneigte Schrägen 22 weisen eine stärkere hydrodynamische Wirkung auf. Dadurch steigt der ausgebildete Druck des Schmierstoffs im Bereich der anlaufenden Schräge 22.1 und der nachfolgenden Erhebung 20 an. Durch die erhöhte Temperatur sinkt gleichzeitig die Viskosität des verwendeten Schmierstoffs. Bei einer geringeren Viskosität des Schmierstoffs stellt sich ein geringerer hydrodynamisch aufgebauter Druck ein. Dies wird durch die geringer geneigten Schrägen 22 ausgeglichen. Es wird somit ein selbsteinstellendes hydrodynamisch wirkendes Lager 10 erhalten, welches sowohl im kalten wie auch im warmen Zustand eine gute und weitestgehend gleiche Tragfähigkeit aufweist.

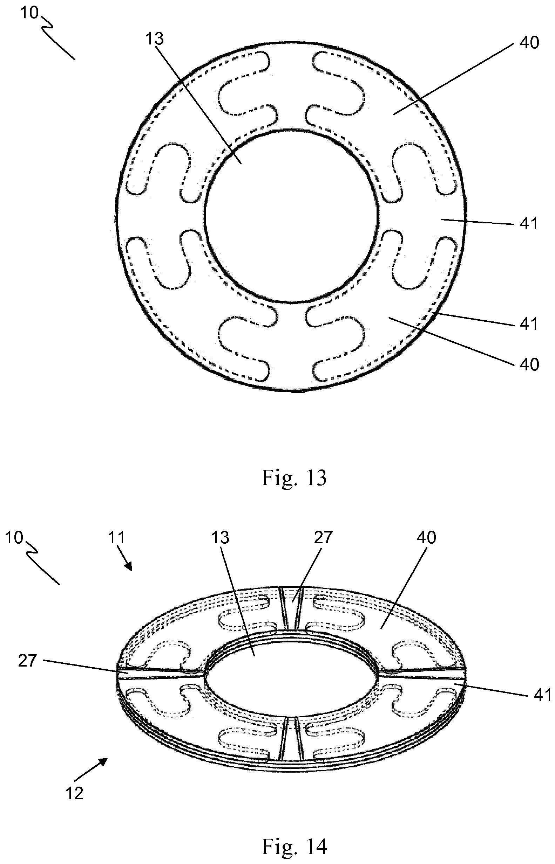

Figur 13 zeigt in einer perspektivischen Seitenansicht ein hydrodynamisch wirkendes Lager 10 in Form einer Anlaufscheibe mit Materialeinlagen aus einem unterschiedlichen Material 40, 41 in einer weiteren Ausführungsform. Die Materialeinlagen aus dem zweiten Material 41 weisen eine geringere thermische Dehnung oder einen geringeren Elastizitätsmodul als das erste Material 40 auf. Damit bilden sich im Betrieb nach den zuvor beschriebenen Mechanismen in den Bereichen des ersten Materials 40 Erhebungen 20 und im Bereich des zweiten Materials 41 Senken aus. Die Materialeinlagen sind in Umfangsrichtung bei verschiedenen Radien des Lagers 10 unterschiedlich weit in die umgebenden Bereiche aus dem ersten Material 40 geführt. Dadurch kann die Ausrichtung und Neigung der Schrägen 22 und damit die Tragfähigkeit des Lagers 10 in Abhängigkeit vom Radius beeinflusst werden. Die Tragfähigkeit des Lagers 10 kann so optimal an die jeweiligen Anforderungen angepasst werden.

Figur 14 zeigt das in Figur 13 gezeigte, hydrodynamisch wirkende Lager 10 mit zusätzlichen Schmierstoffnuten 27. Die Schmierstoffnuten 27 verlaufen radial von der Durchführung 13 zu dem äußeren Rand des hydrodynamisch wirkenden Lagers 10. Sie sind im Bereich der Materialeinlagen aus dem zweiten Material 41 und damit entsprechend der Beschreibung zu Figur 13 im Bereich der im Betrieb ausgebildeten Senken 21 angeordnet. Durch die Schmierstoffnuten 27 kann den hydrodynamisch wirkenden Strukturen 26 Schmierstoff zugeführt werden.

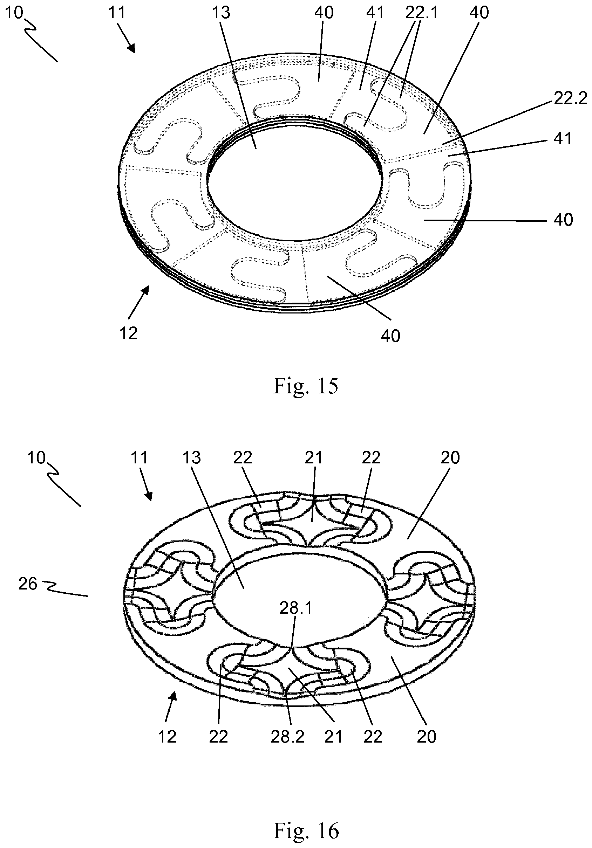

Figur 15 zeigt in einer perspektivischen Seitenansicht ein für eine Drehrichtung ausgelegtes, hydrodynamisch wirkendes Lager 10 in Form einer Anlaufscheibe. Dabei sind ebenfalls Materialeinlagen aus einem ersten Material 40 in eine Matrix aus einem zweiten Material 41 eingelassen. Die Materialien 40, 41 unterscheiden sich vorliegend in ihrem thermischen Ausdehnungskoeffizienten, sodass sich bei Betriebstemperatur die hydrodynamisch wirksamen Strukturen 26 ausbilden. Die Konturen der Materialeinlagen sind in Umfangsrichtung nicht spiegelsymmetrisch ausgeführt. Dadurch ergibt sich eine abweichende Geometrie der ausgebildeten anlaufenden und abfallenden Schrägen 22.1, 22.2. Das derart ausgebildete, hydrodynamisch wirkende Lager 10 ist demnach für eine Drehrichtung optimiert, was bei der Montage des Lagers 10 entsprechend beachtet werden muss.

Figur 16 zeigt in einer perspektivischen Seitenansicht ein hydrodynamisch wirkendes Lager 10 in Form einer Anlaufscheibe mit einer dreidimensionalen Prägung. Ausgehend von der inneren Durchführung 13 des hydrodynamisch wirkenden Lagers 10 weiten sich die Senken 21 zunächst in Umfangsrichtung auf und verengen sich zum äußeren Rand des Lagers 10 wieder. Die beidseitig der Senken 21 angeordneten Schrägen 22 folgen dieser Kontur. Ausgehend von den Senken 21 verringert sich die Neigung der Schrägen 22 bis zu ihrem Übergang in die angrenzenden Erhebungen 20. Die Senken 21 weisen zur Durchführung 13 eine innere Schmierstofföffnung 28.1 und gegenüberliegend eine äußere Schmierstofföffnung 28.2 auf.

Durch den aufgeweiteten Bereich der Senken 21 ist jeweils ein breiter Kanalquerschnitt gebildet. Dabei können die Senken 21 gegenüber den Erhebungen 20 eine vergleichsweise geringe Tiefe vorzugsweise von etwa 5-50 µm auf. Diese Tiefe erweist sich insbesondere bei allen erfindungsgemäßen Ausgestaltungen hydrodynamischer Lager als vorteilhaft, die eine Größe kleiner als 150 mm Außendurchmesser aufweisen Durch die geringe Tiefe und den gleichzeitig breiten Kanalquerschnitt wird mittels Kapillarwirkung eine große Mengenförderung des Schmierstoffs in den Bereich der hydrodynamisch wirkenden Strukturen 26 erreicht. Vorzugsweise weisen die innere Schmierstofföffnung 28.1 und die äußere Schmierstofföffnung 28.2 unterschiedliche Querschnitte auf. Dadurch kann erreicht werden, dass der Druck des Schmierstoffs im Bereich der inneren Schmierstofföffnung 28.1 größer ist als im Bereich der äußeren Schmierstofföffnung 28.2. Es ergibt sich daraus eine Pumpwirkung, mit deren Hilfe der Schmierstoff kontinuierlich ausgetauscht werden kann. Dieses ist insbesondere bei Anwendungen, welche zu hohen Temperaturen des Schmierstoffs führen, vorteilhaft, da dieser so vor thermisch bedingter Zersetzung geschützt wird.

Zum Zwecke der Optimierung bzw. Maximierung der Tragkraft des hydrodynamisch wirkenden erfindungsgemäßen Lagers haben sich folgende Dimensionierungsvorgaben als vorteilhaft erwiesen:
- Die Taschenlänge (Länge eine Senke (21)) in Umfangsrichtung des Lagers sollte wie folgt gewählt werden: Taschenlänge gleich (0,6 bis 0,9) x L. Segment. Dabei wird immer eine Taschengeometrie für sich betrachtet. Zum Beispiel bei vier Taschen und einer Drehrichtung wird dann ¼ des Umfangs als L. Segment betrachtet bei einem Lager für beide Drehrichtungen dann 1/8 als Segment (siehe Figur 13 bis 16).
- Die Taschenbreite (Breite einer Senke (21)) in radialer Richtung des Lagers sollte wie folgt gewählt werden: Taschenbreite gleich (0,4 bis 0,8) x Lagerbreite. Die Lagerbreite ist dabei die Durchmesser-Differenz zwischen dem Außendurchmesser des hydrodynamischen Lagers und dem mit der Durchführung 13 gebildeten Innendurchmesser des hydrodynamischen Lagers.
- Die Taschentiefe (Staurandtiefe bzw. Keiltiefe - maximale Erstreckung der Senke (21) in Lager-Achsenrichtung): T gleich (0,6 bis 2) x h_{min.zul.}. Dementsprechend sollte die Tasche (Senke 21) 0,6 bis 2-mal tiefer sein, als die zulässige minimale Schmierspalthöhe. Diese wird durch die Rauheit und Fertigungsgenauigkeiten der Gleitpartner bestimmt und wird für unterschiedliche Abmessungen variieren.

Die vorstehend beschriebenen Dimensionierungsvorgaben müssen im Rahmen der Erfindung nicht kumulativ verwirklicht werden. Denkbar ist es auch, dass nur eine oder auch zwei Dimensionierungsvorgaben am Lager verwendet sind um eine gute Tragfähigkeit zu erhalten.

## Patentansprüche

1. Hydrodynamisch wirkendes Lager (10), nämlich hydrodynamisch wirkendes, scheibenförmiges Axiallager oder hydrodynamische Anlaufscheibe, wobei das Lager (10) an den gegenüberliegenden Seiten (11, 12) ausgebildet ist, um hydrodynamische, sich in Umfangsrichtung erstreckende Strukturen (26) mit Erhebungen (20) und zwischen benachbarten Erhebungen (20) angeordneten Senken (21) zu bilden,
**dadurch gekennzeichnet,**
**dass** das Lager (10) aus zumindest zwei Materialien (40, 41) mit unterschiedlichen Wärmeausdehnungskoeffizienten ausgebildet ist, derart, dass sie geeignet sind, die hydrodynamischen Strukturen (26) wenigstens einer Seite (11, 12) des Lagers (10) zumindest bereichsweise durch unterschiedliche Volumenausdehnung der Materialien (40, 41) bei der jeweils herrschenden Betriebstemperatur auszubilden.

2. Hydrodynamisch wirkendes Lager (10) nach Anspruch 1,
**dadurch gekennzeichnet,**
**dass** zwischen benachbarten Senken (21) Schrägen (22, 22.1, 22.2) der hydrodynamischen Strukturen (26) angeordnet sind, die, ausgehend von den Senken (21), in Richtung auf die Erhebungen (20) verlaufen,
und **dass** zumindest ein Teil der Erhebungen (20) der hydrodynamischen Strukturen (26) der ersten Seite (11) des Lagers (10) im Bereich zwischen zwei Senken (21) der hydrodynamischen Strukturen (26) der zweiten Seite (12) des Lagers (10) angeordnet sind, wobei die Erhebungen (20) einer Seite (11, 12) des Lagers (10) in Umfangsrichtung versetzt zueinander angeordnet sind.

3. Hydrodynamisch wirkendes Lager (10) nach Anspruch 2,
**dadurch gekennzeichnet,**
**dass** die hydrodynamischen Strukturen (26) wenigstens einer Seite des Lagers (10) sich periodisch wiederholend ausgebildet sind, und/oder dass Erhebungen (20) der Strukturen (26) auf der ersten Seite (11) des Lagers (10) in Umfangsrichtung winkelversetzt zu Senken (21) der Strukturen (26) auf der gegenüberliegenden zweiten Seite (12) angeordnet sind.

4. Hydrodynamisch wirkendes Lager (10) nach einem der Ansprüche 2 oder 3,
**dadurch gekennzeichnet,**
**dass** die beiden Seiten (11, 12) des Lagers (10) eine unterschiedliche Anzahl von Erhebungen (12) aufweisen, und/oder dass die Materialstärke des Lagers (10) in Umfangsrichtung und/oder in radialer Richtung variiert.

5. Hydrodynamisch wirkendes Lager (10) nach einem der Ansprüche 2 bis 4,
**dadurch gekennzeichnet,**
**dass** im Bereich der Erhebungen (20) Ruhekontaktflächen (23) ausgebildet sind, die vorzugsweise in Umfangsrichtung verlaufen.

6. Hydrodynamisch wirkendes Lager (10) nach einem der Ansprüche 2 bis 5,
**dadurch gekennzeichnet,**
**dass** die Senken (21) und/oder die Schrägen (22, 22.1, 22.2) radial außen und/oder innen durch Stauränder (24, 25) begrenzt sind, und/oder dass die Erhebungen (20) und/oder die Senken (21) von einem inneren zu einem äußeren Bereich des Lagers (10) geradlinig oder auf gekrümmten Bahnen verlaufen.

7. Hydrodynamisch wirkendes Lager (10) nach einem der Ansprüche 5,
**dadurch gekennzeichnet,**
**dass** in Umfangsrichtung der von einer Ruhekontaktfläche (23) abgedeckte Streckenabschnitt für alle Radien des Lagers (10) gleich bleibt oder dass die Ruhekontaktflächen (23) für alle Radien des Lagers (10) in Umfangsrichtung den gleichen Winkelbereich überdecken und/oder
**dass** sich der in Umfangsrichtung von einer Ruhekontaktfläche (23) abgedeckte Streckenabschnitt und/oder der in Umfangsrichtung von einer Ruhekontaktfläche (23) überdeckte Winkelbereich mit steigendem Abstand von der Mittelachse des Lagers (10) vergrößert und/oder verkleinert.

8. Hydrodynamisch wirkendes Lager (10) nach einem der Ansprüche 2 bis 7,
**dadurch gekennzeichnet,**
**dass** der in Richtung der Flächennormalen einer Mittenebene (32) des Lagers (10) gemessene Abstand der Erhebungen (20) gegenüber der Mittenebene (32) für alle Radien gleich bleibt und dass sich der Abstand der Senken (21) gegenüber der Mittenebene (32) in Abhängigkeit vom Radius verändert, insbesondere dass sich bei steigendem Radius der in Richtung der Flächennormalen der Mittenebene (32) des Lagers (10) gemessene Abstand zwischen einer Senke (21) und einer angrenzenden Erhebung (20) verkleinert.

9. Hydrodynamisch wirkendes Lager (10) nach einem der Ansprüche 2 bis 8,
**dadurch gekennzeichnet,**
**dass** die hydrodynamischen Strukturen (26) urformend oder über einen spanenden oder prägenden Bearbeitungsschritt in das Lager (10) eingebracht ist.

10. Hydrodynamisch wirkendes Lager (10) nach einem der Ansprüche 2 bis 9,
**dadurch gekennzeichnet,**
**dass** die zumindest zwei Materialien (40, 41) an Grenzflächen aneinander liegen und dass die zumindest zwei Materialien (40, 41) an den Grenzflächen zumindest bereichsweise stoffschlüssig und/oder kraftschlüssig miteinander verbunden sind.

11. Hydrodynamisch wirkendes Lager (10) nach einem der Ansprüche 2 bis 10,
**dadurch gekennzeichnet,**
**dass** das Lager (10) aus einem Polymerwerkstoff gebildet ist oder dass das Lager aus einer Kombination zumindest eines ersten Polymerwerkstoffs mit einem zweiten Polymerwerkstoff gebildet ist oder dass das Lager (10) aus einer Kombination zumindest eines ersten Polymerwerkstoffs mit einem Nicht-Polymerwerkstoff, insbesondere einem Metall, einer Keramik oder einem mineralischen Werkstoff, gebildet ist.

12. Hydrodynamisch wirkendes Lager (10) nach einem der Ansprüche 2 - 11,
**dadurch gekennzeichnet,**
**dass** die Bereiche der Erhebungen (20), insbesondere die Bereiche der Ruhekontaktflächen (23), aus Metall und die Bereiche der Schrägen (22, 22.1, 22.2) und/oder der Senken (21) aus einem Polymerwerkstoff gebildet sind.

13. Hydrodynamisch wirkendes Lager (10) nach einem der Ansprüche 2 - 12,
**dadurch gekennzeichnet,**
**dass** die erste und die zweite Seite (11, 12) des Lagers (10) jeweils durch eine in Umfangsrichtung segmentartige und periodische Abfolge von zumindest zwei Materialien (40, 41) gebildet sind und dass die periodische Abfolge der Segmente der ersten Seite (11) gegenüber der zweiten Seite (12) winkelversetzt ist, und/oder
**dass** im Bereich der Senken (21) und zumindest in einem an die Senken (21) angrenzenden Bereich der Schrägen (22, 22.1, 22.2) zumindest bereichsweise ein Material (40, 41) mit einem vergleichsweise höheren thermischen Ausdehnungskoeffizient und zumindest im Bereich der Erhebungen (20) ein Material (40, 41) mit einem vergleichsweise geringeren thermischen Ausdehnungskoeffizienten angeordnet ist.

14. Hydrodynamisch wirkendes Lager (10) nach einem der Ansprüche 2 bis 13,
**dadurch gekennzeichnet,**
**dass** die Fläche des hydrodynamisch wirksamen Bereichs der hydrodynamischen Strukturen (26) einer Seite (11, 12) des hydrodynamisch wirkenden Lagers (10) einen Anteil von 30% bis 70% der Gesamtfläche der jeweiligen Seite (11, 12) des hydrodynamisch wirkenden Lagers (10) ausmacht, bevorzugt dass der Anteil in einem Bereich von 45 - 55% liegt, besonders bevorzugt dass der Anteil 50% beträgt.

15. Hydrodynamisch wirkendes Lager (10) nach einem der Ansprüche 2 bis 14,
**dadurch gekennzeichnet,**
**dass** die Fläche des hydrodynamisch wirksamen Anteils der hydrodynamischen Strukturen (26) einer Seite (11, 12) des hydrodynamisch wirkenden Lagers (10) größer ist als die Fläche des hydrodynamisch wirksamen Anteils der hydrodynamischen Strukturen (26) der gegenüberliegenden Seite (11, 12), insbesondere dass die Fläche des hydrodynamisch wirksamen Anteils der hydrodynamischen Strukturen (26) einer Seite (11, 12) größer als 50% und die Fläche des hydrodynamisch wirksamen Anteils der hydrodynamischen Strukturen (26) der gegenüberliegenden Seite (11, 12) kleiner als 50%, bezogen auf die Gesamtfläche der jeweiligen Seite (11, 12), ist.

## Claims

1. Hydrodynamically acting bearing (10), namely hydrodynamically acting, disc-shaped thrust bearing or hydrodynamic thrust washer, wherein the bearing (10) is formed on the opposite sides (11, 12) to form hydrodynamic, circumferentially extending structures (26) with protrusions (20) and depressions (21) arranged between adjacent protrusions (20)
**characterized in that**
the bearing (10) is formed from at least two materials (40, 41) having different coefficients of thermal expansion, such that they are suitable for forming the hydrodynamic structures (26) of at least one side (11, 12) of the bearing (10), at least in regions, by different volume expansion of the materials (40, 41) at the respectively prevailing operating temperature.

2. Hydrodynamically acting bearing (10) according to claim 1,
**characterized in that**
slopes (22, 22.1, 22.2) of the hydrodynamic structures (26) are arranged between adjacent depressions (21), which slopes, starting from the depressions (21), run in the direction of the elevations (20)
and **in that** at least some of the elevations (20) of the hydrodynamic structures (26) of the first side (11) of the bearing (10) are arranged in the region between two depressions (21) of the hydrodynamic structures (26) of the second side (12) of the bearing (10), the elevations (20) of one side (11, 12) of the bearing (10) being arranged offset with respect to one another in the circumferential direction.

3. Hydrodynamically acting bearing (10) according to claim 2,
**characterized in that**
the hydrodynamic structures (26) of at least one side of the bearing (10) are designed to repeat periodically, and/or **in that** elevations (20) of the structures (26) on the first side (11) of the bearing (10) are arranged offset at an angle in the circumferential direction with respect to depressions (21) of the structures (26) on the opposite second side (12).

4. Hydrodynamically acting bearing (10) according to one of claims 2 or 3,
**characterized in that**
the two sides (11, 12) of the bearing (10) have a different number of elevations (12), and/or that the material thickness of the bearing (10) varies in the circumferential direction and/or in the radial direction.

5. Hydrodynamically acting bearing (10) according to one of claims 2 to 4,
**characterized in that**
rest contact surfaces (23) are formed in the region of the elevations (20), which preferably extend in the circumferential direction.

6. Hydrodynamically acting bearing (10) according to one of claims 2 to 5,
**characterized in that**
the depressions (21) and/or the slopes (22, 22.1, 22.2) are bounded radially externally and/or internally by retaining edges (24, 25), and/or **in that** the elevations (20) and/or the depressions (21) extend from an inner to an outer region of the bearing (10) in a straight line or on curved paths.

7. Hydrodynamically acting bearing (10) according to claim 5,
**characterized in that**,
in the circumferential direction, the section covered by a rest contact surface (23) remains the same for all radii of the bearing (10) or **in that** the rest contact surfaces (23) cover the same angular range for all radii of the bearing (10) in the circumferential direction and/or
**in that** the section covered in the circumferential direction by a rest contact surface (23) and/or the angular range covered in the circumferential direction by a rest contact surface (23) increases and/or decreases with increasing distance from the center axis of the bearing (10).

8. Hydrodynamically acting bearing (10) according to one of claims 2 to 7,
**characterized in that**
the distance of the elevations (20) measured in the direction of the surface normal of a center plane (32) of the bearing (10) relative to the center plane (32) remains the same for all radii and **in that** the distance of the depressions (21) relative to the center plane (32) changes as a function of the radius, in particular **in that** the distance between a depression (21) and an adjacent elevation (20) measured in the direction of the surface normal of the center plane (32) of the bearing (10) decreases as the radius increases.

9. Hydrodynamically acting bearing (10) according to one of claims 2 to 8,
**characterized in that**
the hydrodynamic structures (26) are introduced into the bearing (10) by primary shaping or by a machining or stamping step.

10. Hydrodynamically acting bearing (10) according to one of claims 2 to 9,
**characterized in that**
the at least two materials (40, 41) are adjacent to one another at interfaces, and **in that** the at least two materials (40, 41) are joined to one another at the interfaces, at least in regions, by a material bond and/or by a frictional bond.

11. Hydrodynamically acting bearing (10) according to any one of claims 2 to 10,
**characterized in that**
the bearing (10) is formed of a polymer material or that the bearing is formed of a combination of at least a first polymer material with a second polymer material or that the bearing (10) is formed of a combination of at least a first polymer material with a non-polymer material, in particular a metal, a ceramic or a mineral material.

12. Hydrodynamically acting bearing (10) according to any one of claims 2-11, **characterized in that**
the regions of the elevations (20), in particular the regions of the rest contact surfaces (23), are formed from metal and the regions of the slopes (22, 22.1, 22.2) and/or the depressions (21) are formed from a polymer material.

13. Hydrodynamically acting bearing (10) according to one of the claims 2-12,
**characterized in that**
the first and the second side (11, 12) of the bearing (10) are each formed by a segment-like and periodic sequence of at least two materials (40, 41) in the circumferential direction, and that the periodic sequence of the segments of the first side (11) is angularly offset with respect to the second side (12), and/or
**in that** in the region of the depressions (21) and at least in a region of the slopes (22, 22.1, 22.2) adjacent to the depressions (21), a material (40, 41) with a comparatively higher coefficient of thermal expansion is arranged at least in regions and a material (40, 41) with a comparatively lower coefficient of thermal expansion is arranged at least in the region of the elevations (20).

14. Hydrodynamically acting bearing (10) according to one of claims 2 to 13,
**characterized in that**
the area of the hydrodynamically effective region of the hydrodynamic structures (26) of a side (11, 12) of the hydrodynamically acting bearing (10) constitutes a proportion of 30% to 70% of the total area of the respective side (11, 12) of the hydrodynamically acting bearing (10), preferably that the proportion is in a range of 45 - 55%, particularly preferably that the proportion is 50%.

15. Hydrodynamically acting bearing (10) according to one of claims 2 to 14,
**characterized in that**
the area of the hydrodynamically effective portion of the hydrodynamic structures (26) of one side (11, 12) of the hydrodynamically acting bearing (10) is larger than the area of the hydrodynamically effective portion of the hydrodynamic structures (26) of the opposite side (11, 12), in particular **in that** the area of the hydrodynamically effective portion of the hydrodynamic structures (26) of one side (11, 12) is greater than 50% and the area of the hydrodynamically effective portion of the hydrodynamic structures (26) of the opposite side (11, 12) is less than 50%, based on the total area of the respective side (11, 12).

## Revendications

1. Palier à action hydrodynamique (10), à savoir palier de butée en forme de disque à action hydrodynamique ou rondelle de butée hydrodynamique, dans lequel le palier (10) est formé sur les côtés opposés (11, 12) pour former des structures hydrodynamiques (26) s'étendant circonférentiellement avec des élévations (20) et des dépressions (21) disposées entre des élévations adjacentes (20)
**caractérisé en ce que**
le palier (10) est formé d'au moins deux matériaux (40, 41) ayant des coefficients de dilatation thermique différents, de sorte qu'ils conviennent pour former les structures hydrodynamiques (26) d'au moins un côté (11, 12) du palier (10), au moins dans des régions, par une dilatation volumétrique différente des matériaux (40, 41) à la température de fonctionnement respectivement dominante.

2. Palier à action hydrodynamique (10) selon la revendication 1,
**caractérisé en ce que**
des pentes (22, 22.1, 22.2) des structures hydrodynamiques (26) sont disposées entre des dépressions adjacentes (21), lesquelles pentes, partant des dépressions (21), s'étendent en direction des élévations (20)
et **en ce qu'**au moins une partie des élévations (20) des structures hydrodynamiques (26) du premier côté (11) du palier (10) est disposée dans la zone entre deux dépressions (21) des structures hydrodynamiques (26) du deuxième côté (12) du palier (10), les élévations (20) d'un côté (11, 12) du palier (10) étant disposées de manière décalée les unes par rapport aux autres dans la direction périphérique.

3. Palier à action hydrodynamique (10) selon la revendication 2,
**caractérisé en ce que**
les structures hydrodynamiques (26) d'au moins un côté du palier (10) sont conçues de manière à se répéter périodiquement, et/ou **en ce que** des élévations (20) des structures (26) sur le premier côté (11) du palier (10) sont disposées de manière décalée selon un angle dans la direction circonférentielle par rapport à des dépressions (21) des structures (26) sur le deuxième côté opposé (12).

4. Palier à action hydrodynamique (10) selon l'une des revendications 2 ou 3,
**caractérisé en ce que**
les deux côtés (11, 12) du palier (10) ont un nombre différent d'élévations (12), et/ou que l'épaisseur du matériau du palier (10) varie dans la direction circonférentielle et/ou dans la direction radiale.

5. Palier à action hydrodynamique (10) selon l'une quelconque des revendications 2 à 4,
**caractérisé en ce que**
des surfaces de contact de repos (23) sont formées dans la région des élévations (20), qui s'étendent de préférence dans la direction circonférentielle.

6. Palier à action hydrodynamique (10) selon l'une des revendications 2 à 5,
**caractérisé en ce que**
les dépressions (21) et/ou les pentes (22, 22.1, 22.2) sont délimitées radialement à l'extérieur et/ou à l'intérieur par des bords de retenue (24, 25), et/ou **en ce que** les élévations (20) et/ou les dépressions (21) s'étendent d'une zone intérieure à une zone extérieure du palier (10) en ligne droite ou sur des trajectoires courbes.

7. Palier à action hydrodynamique (10) selon la revendication 5,
**caractérisé en ce que**,
dans la direction circonférentielle, la section couverte par une surface de contact au repos (23) reste la même pour tous les rayons du palier (10) ou **en ce que** les surfaces de contact au repos (23) couvrent la même plage angulaire pour tous les rayons du palier (10) dans la direction circonférentielle et/ou
**en ce que** la section couverte dans la direction circonférentielle par une surface de contact au repos (23) et/ou la plage angulaire couverte dans la direction circonférentielle par une surface de contact au repos (23) augmente et/ou diminue avec une distance croissante de l'axe central du palier (10).

8. Palier à action hydrodynamique (10) selon l'une quelconque des revendications 2 à 7,
**caractérisé en ce que**
la distance des élévations (20) mesurées dans la direction de la normale à la surface d'un plan central (32) du palier (10) par rapport au plan central (32) reste la même pour tous les rayons, et **en ce que** la distance des dépressions (21) par rapport au plan central (32) change en fonction du rayon, en particulier **en ce que** la distance entre une dépression (21) et une élévation adjacente (20) mesurée dans la direction de la normale à la surface du plan central (32) du palier (10) diminue lorsque le rayon augmente.

9. Palier à action hydrodynamique (10) selon l'une quelconque des revendications 2 à 8,
**caractérisé en ce que**
les structures hydrodynamiques (26) sont introduites dans le palier (10) au moyen d'une mise en forme primaire ou au moyen d'une étape d'usinage par découpe ou gaufrage.

10. Palier à action hydrodynamique (10) selon l'une quelconque des revendications 2 à 9,
**caractérisé en ce que**
les au moins deux matériaux (40, 41) sont adjacents l'un à l'autre au niveau d'interfaces, et **en ce que** les au moins deux matériaux (40, 41) sont reliés l'un à l'autre au niveau des interfaces, au moins par zones, par liaison de matière et/ou par liaison de force.

11. Palier à action hydrodynamique (10) selon l'une quelconque des revendications 2 à 10,
**caractérisé en ce que**
le palier (10) est formé d'un matériau polymère ou que le palier est formé d'une combinaison d'au moins un premier matériau polymère avec un second matériau polymère ou que le palier (10) est formé d'une combinaison d'au moins un premier matériau polymère avec un matériau non polymère, en particulier un métal, une céramique ou un matériau minéral.

12. Palier à action hydrodynamique (10) selon l'une quelconque des revendications 2 à 11,
**caractérisé en ce que**
les zones des élévations (20), en particulier les zones des surfaces de contact de repos (23), sont formées de métal et les zones des pentes (22, 22.1, 22.2) et/ou des dépressions (21) sont formées d'un matériau polymère.

13. Palier à action hydrodynamique (10) selon l'une quelconque des revendications 2 à 12,
**caractérisé en ce que**
le premier et le deuxième côté (11, 12) du palier (10) sont formés chacun par une séquence périodique en forme de segment d'au moins deux matériaux (40, 41) dans la direction périphérique, et **en ce que** la séquence périodique des segments du premier côté (11) est décalée angulairement par rapport au deuxième côté (12), et/ou que dans la zone des dépressions (21) et au moins dans une zone des pentes (22, 22.1, 22.2) adjacentes à des dépressions (21), un matériau (40, 41) avec un coefficient de dilatation thermique comparativement plus élevé est disposé au moins par zones et un matériau (40, 41) avec un coefficient de dilatation thermique comparativement plus faible est disposé au moins dans la zone des élévations (20).

14. Palier à action hydrodynamique (10) selon l'une quelconque des revendications 2 à 13,
**caractérisé en ce que**
la surface de la zone à action hydrodynamique des structures hydrodynamiques (26) d'un côté (11, 12) du palier à action hydrodynamique (10) constitue une proportion de 30 % à 70 % de la surface totale du côté respectif (11, 12) du palier à action hydrodynamique (10), de préférence que la proportion est dans une plage de 45 à 55 %, de manière particulièrement préférée que la proportion est de 50 %.

15. Palier à action hydrodynamique (10) selon l'une quelconque des revendications 2 à 14,
**caractérisé en ce que**
la surface de la zone à action hydrodynamique des structures hydrodynamiques (26) d'un côté (11, 12) du palier à action hydrodynamique (10) est plus grande que la zone à action hydrodynamique des structures hydrodynamiques (26) du côté opposé (11, 12), en particulier **en ce que** la surface de la zone à action hydrodynamique des structures hydrodynamiques (26) d'un côté (11, 12) est supérieure à 50% et la surface de la zone à action hydrodynamique des structures hydrodynamiques (26) du côté opposé (11, 12) est inférieure à 50%, sur la base de la surface totale du côté respectif (11, 12).
